# EUROPEAN PATENT SPECIFICATION

(11) **EP 3 823 068 B1**
(45) Date of publication and mention of the grant of the patent: **24.04.2024**
(21) Application number: 20206647.8
(22) Date of filing: 10.11.2020
(51) Int. Cl.: H01M 8/0271, H01M 8/0286, H01M 8/1004, H01M 8/1018, H01M 8/10

(54) **MANUFACTURING DEVICE AND MANUFACTURING METHOD FOR SUBGASKET ADDED MEMBRANE ELECTRODE ASSEMBLY**
HERSTELLUNGSVORRICHTUNG UND VERFAHREN ZUR HERSTELLUNG EINER MEMBRANELEKTRODENANORDNUNG MIT ZUSÄTZLICHER UNTERDICHTUNG
DISPOSITIF DE FABRICATION ET PROCÉDÉ DE FABRICATION D'UN ASSEMBLAGE MEMBRANE-ÉLECTRODES AJOUTÉE À SOUS-JOINTS

(30) Priority: 15.11.2019 JP 2019207131
(43) Date of publication of application: 19.05.2021
(73) Proprietor: SCREEN Holdings Co., Ltd., Kyoto-shi, Kyoto 602-8585 (JP)
(72) Inventor: YANAGISAWA, Nobuo, Kyoto-shi, Kyoto 602-8585 (JP); TAKAGI, Yoshinori, Kyoto-shi, Kyoto 602-8585 (JP); OKADA, Hiroshi, Kyoto-shi, Kyoto 602-8585 (JP)
(74) Representative: Goddar, Heinz J.

(56) References cited:
- KR-A- 20120 117 266
- US-A1- 2011 151 350
- US-A1- 2013 068 371
- US-A1- 2015 288 019

## Description

### Technical Field

The present invention relates to a technique of manufacturing a subgasket added membrane electrode assembly.

### Background Art

Fuel cells have attracted attention as driving power sources for automobiles, mobiles phones, etc. Fuel cells are power generation systems of generating power using electrochemical reaction between hydrogen (H₂) contained in fuel and oxygen (O₂) in the air. Fuel cells have an advantage of achieving higher power generation efficiency and placing lower load on environment than other types of batteries.

There are some types of fuel cells responsive to electrolytes to be used. One of such fuel cells is a polymer electrolyte fuel cell (PEFC) using an ion-exchange membrane as an electrolyte (electrolyte membrane). The polymer electrolyte fuel cell achieves operation at ordinary temperatures and reduction in size and weight, so that it is expected to be applied to automobiles or portable devices.

The polymer electrolyte fuel cell generally has a configuration with a stack of a plurality of cells. One of the cells includes a membrane electrode assembly (MEA) and a pair of separators which sandwich the MEA from opposite sides. The MEA includes an electrolyte membrane and electrode layers (catalyst layers) in a pair formed on opposite surfaces of the electrolyte membrane. One of the electrode layers in a pair is an anode electrode, and the other is a cathode electrode. As fuel gas containing hydrogen contacts the anode electrode and air contacts the cathode electrode, electrochemical reaction is caused to generate power.

The foregoing MEA is prone to damage with external pressure. Hence, in a process of manufacturing the polymer electrolyte fuel cell, a resin frame (subgasket film) is attached to the MEA, if appropriate. In some cases, for handling the MEA, the subgasket film is grasped, for example, instead of grasping the MEA itself.

For example, patent literature 1 discloses a gasket applicator that applies a subgasket film to a MEA. In this gasket applicator, cut portions are provided at a predetermined pitch in an elongated strip-shaped subgasket film to cut out non-used regions, and the MEA on an elongated strip-shaped first backsheet is cut into a shape conforming to the shape of an electrode layer. Then, while the position of MEA is aligned with the position of the cut portion (non-used region) of the subgasket film, the MEA and the subgasket film are brought into contact with each other. By doing so, the MEA is bonded to the elongated strip-shaped subgasket film. Patent literature 1 further discloses that subgasket films are applied to opposite sides of the MEA including electrode layers formed the opposite surfaces thereof.

US 2011/151350 A1 relates to fuel cell subassemblies incorporating subgasketed thrifted membranes. It discloses a subsystem configured to register and attach a subgasketed membrane web to a second subgasketed web. Die and anvil rollers form aperture slugs in the second subgasketed web. The subgasketed membrane web is laminated to the second subgasketed web, which is on a carrier web with the aperture slugs still in place, as these components pass between the roll and foam or rubber lamination roll.

### Citation List

### Patent Literature

Patent Literature 1: Japanese Patent Application Laid-Open No. 2018-142407
Patent Literatur 2: US 2011/151350 A1

### Summary of Invention

### Technical Problem

The elongated strip-shaped subgasket films may be applied to the opposite sides of the MEA by applying a first subgasket film to the MEA on one side and then applying a second subgasket film to the MEA on the opposite side. For application of the second subgasket film, the positions of the first and second subgasket films may be adjusted so as to align the position of an electrode layer on the opposite side of the MEA and the position of a cut portion at the second subgasket film with each other. However, on the occurrence of non-conformity of an interval between catalyst layers on the first subgasket film to an interval between cut portions formed at the second subgasket film, bonding the first and second subgasket films while making position adjustment therebetween may cause slack (redundant portion) in one of the subgasket films. The occurrence of slack may cause deformation such as creases in the subgasket film or the MEA.

The present invention is intended to provide a technique of reducing the occurrence of slack in subgasket films applied to opposite surfaces of a MEA.

### Solution to Problem

To solve the foregoing problem, a first aspect is intended for a manufacturing device for a subgasket added membrane electrode assembly (MEA) in which a subgasket film is applied to a MEA including an electrolyte membrane, a first catalyst layer located on one side of the electrolyte membrane, and a second catalyst layer located on an opposite side of the electrolyte membrane. The manufacturing device comprises: a first transport mechanism that transports a first base material including the MEA and an elongated strip-shaped first subgasket film bonded to the MEA on the one side; a position determination part that determines the position of the second catalyst layer transported by the first transport mechanism; a second transport mechanism that transports a subgasket base material including an elongated strip-shaped second subgasket film; a cutting mechanism that forms a cut portion for separating the second subgasket film transported by the second transport mechanism into a corresponding region of a shape corresponding to the second catalyst layer and a non-corresponding region other than the corresponding region in response to the position of the second catalyst layer determined by the position determination part; and a bonding mechanism that bonds the second subgasket film provided with the cut portion to the first base material on the opposite side while aligning the position of the corresponding region and the position of the second catalyst layer with each other.

A second aspect is intended for the manufacturing device for the subgasket added MEA according to the first aspect, wherein the first material includes a first backsheet located on the one side of the first subgasket film.

A third aspect is intended for the manufacturing device for the subgasket added MEA according to the first or second aspect, wherein the first base material includes a first cover film formed between the first subgasket film and the MEA and having a shape corresponding to the first catalyst layer, and the first base material includes a first cut portion penetrating the first subgasket film along an edge of the first cover film.

A fourth aspect is intended for the manufacturing device for the subgasket added MEA according to any one of the first to third aspects, wherein the subgasket base material further includes an elongated strip-shaped second backsheet located on one side of the second subgasket film.

A fifth aspect is intended for the manufacturing device for the subgasket added MEA according to any one of the first to fourth aspects, wherein the subgasket base material further includes an elongated strip-shaped second cover film located on an opposite side of the second subgasket film, the cutting mechanism forms a second cut portion in the subgasket base material, the second cut portion penetrating the second cover film and the second subgasket film along a shape corresponding to the second catalyst layer, and the manufacturing device further comprises a first removal mechanism that removes the non-corresponding region of the second cover film from the subgasket base material provided with the second cut portion.

A sixth aspect is intended for the manufacturing device for the subgasket added MEA according to any one of the first to fifth aspects, wherein the manufacturing device further comprises a second removal mechanism that removes the corresponding region of the second subgasket film.

A seventh aspect is intended for the manufacturing device for the subgasket added MEA according to any one of the first to sixth aspects, wherein the cutting mechanism includes: a cutting blade for cutting the second subgasket film; and a moving mechanism that moves the cutting blade relative to the second subgasket film in a longitudinal direction and a width direction of the second subgasket film.

An eighth aspect is intended for the manufacturing device for the subgasket added MEA according to any one of the first to seventh aspects, wherein the first base material includes a plurality of the second catalyst layers arranged at an interval in a longitudinal direction of the first subgasket film, and the cutting mechanism forms the cut portion in the second subgasket film to conform to the interval between the second catalyst layers.

A ninth aspect is intended for a manufacturing method for a subgasket added MEA in which a subgasket is applied to a MEA including an electrolyte membrane, a first catalyst layer located on one side of the electrolyte membrane, and a second catalyst layer located on an opposite side relative to the electrolyte membrane. The manufacturing method comprises the steps of: (a) transporting a first base material including the MEA and an elongated strip-shaped first subgasket film bonded to the MEA on the one side; (b) determining the position of the second catalyst layer transported by the step (a); (c) transporting a subgasket base material including an elongated strip-shaped second subgasket film; (d) forming a cut portion for separating the second subgasket film transported by the step (c) into a corresponding region of a shape corresponding to the second catalyst layer and a non-corresponding region in response to the position of the second catalyst layer determined by the step (b); and (e) bonding the second subgasket film provided with the cut portion by the step (d) to the first base material on the opposite side while aligning the position of the corresponding region and the position of the second catalyst layer with each other.

A tenth aspect is intended for the manufacturing method for the subgasket added MEA according to the ninth aspect, wherein the subgasket base material further includes an elongated strip-shaped second cover film, the step (d) includes a step of forming a cut portion penetrating the second cover film and the second subgasket film along a shape corresponding to the second catalyst layer, and the manufacturing method further comprises the step of: (e) removing the non-corresponding region of the second cover film from the subgasket base material provided with the cut portion by the step (d).

An eleventh aspect is intended for the manufacturing method for the subgasket added MEA according to the ninth or tenth aspect, wherein the manufacturing method further comprises the step of: (f) removing the corresponding region from the second subgasket film provided with the cut portion by the step (d).

A twelfth aspect is intended for the manufacturing method for the subgasket added MEA according to any one of the ninth to elevenths aspect, wherein the step (d) includes a step of moving a cutting blade for cutting the second subgasket film relative to the second subgasket film in a longitudinal direction and a width direction of the second subgasket film.

### Advantageous Effects of Invention

According to the manufacturing device for the subgasket added MEA of the first aspect, the second subgasket film is separated into the corresponding region and the non-corresponding region in response to the position of the MEA at the first base material. This facilitates alignment between the position of the corresponding region in the second subgasket film and the position of the MEA during bonding of the second subgasket film to the first base material. This makes it possible to reduce the occurrence of slack in the first and second subgasket films.

According to the manufacturing device for the subgasket added MEA of the second aspect, the first material includes the first backsheet to provide higher rigidity of the MEA. This makes it possible to reduce the occurrence of deformation such as creases in the MEA.

According to the manufacturing device for the subgasket added MEA of the third aspect, the corresponding region of the first subgasket film can be bonded to the first catalyst layer of the MEA via the first cover film. This provides higher rigidity of the first catalyst layer.

According to the manufacturing device for the subgasket added MEA of the fourth aspect, the subgasket base material includes the second subgasket film and the second backsheet to provide higher rigidity of the second subgasket film. This makes it possible to reduce the occurrence of deformation such as creases in the second subgasket film.

According to the manufacturing device for the subgasket added MEA of the fifth aspect, the corresponding region of the second subgasket film can be bonded to the second catalyst layer via the second cover film. This provides higher rigidity of the second catalyst layer.

The manufacturing device for the subgasket added MEA of the sixth aspect allows removal of the corresponding region of the second subgasket film.

According to the manufacturing device for the subgasket added MEA of the seventh aspect, moving the cutting blade in the longitudinal direction and the width direction of the second subgasket film allows the cut portion to be formed at any position at the second subgasket film.

According to the manufacturing device for the subgasket added MEA of the eighth aspect, the cut portion is formed in the second subgasket film to conform to the interval between the second catalyst layers. This facilitates alignment between the position of the second catalyst layer and the position of the corresponding region of the second subgasket film.

According to the manufacturing method for the subgasket added MEA of the ninth aspect, the second subgasket film is separated into the corresponding region and the non-corresponding region in response to the position of the second catalyst layer at the first base material. This facilitates alignment between the position of the corresponding region in the second subgasket film and the position of the second catalyst layer during bonding of the second subgasket film to the first base material. This makes it possible to reduce the occurrence of slack in the first and second subgasket films.

According to the manufacturing method for the subgasket added MEA of the tenth aspect, the corresponding region of the second subgasket film can be bonded to the second catalyst layer via the second cover film. This provides higher rigidity of the second catalyst layer.

The manufacturing method for the subgasket added MEA of the eleventh aspect allows removal of the corresponding region of the second subgasket film.

According to the manufacturing method for the subgasket added MEA of the twelfth aspect, moving the cutting blade in the longitudinal direction and the width direction of the second subgasket film allows the cut portion to be formed at any position at the second subgasket film.

### Brief Description of Drawings

Fig. 1 shows a first base material preparation unit of a gasket applicator according to a first preferred embodiment;
Fig. 2 shows a second base material preparation unit and a second bonding mechanism of the gasket applicator according to the first preferred embodiment;
Fig. 3 is a longitudinal sectional view and a plan view schematically showing an electrode layer base material sent from a first supply roller;
Fig. 4 is a longitudinal sectional view and a plan view schematically showing the electrode layer base material with a cut portion;
Fig. 5 is a longitudinal sectional view and a plan view schematically showing the electrode layer base material from which a non-adopted region of a MEA layer is separated;
Fig. 6 is a longitudinal sectional view and a plan view schematically showing a subgasket base material;
Fig. 7 is a longitudinal sectional view and a plan view schematically showing the subgasket base material from which a non-corresponding region of a cover film is separated;
Fig. 8 is a longitudinal sectional view schematically showing the electrode layer base material and the subgasket base material to be bonded to each other by a first bonding mechanism;
Fig. 9 is a longitudinal sectional view and a plan view schematically showing a first base material;
Fig. 10 is a block diagram showing electrical connection between a controller and each unit in the subgasket applicator;
Fig. 11 schematically shows a first half-cut part on a +X side;
Fig. 12 schematically shows the first half-cut part on the +X side;
Fig. 13 schematically shows the first half-cut part on a -Y side;
Fig. 14 schematically shows an X direction drive section of the first half-cut part;
Fig. 15 is a plan view showing a suction surface of a suction stage;
Fig. 16 is a plan view showing the electrode layer base material sucked on the suction surface of the suction stage;
Figs. 17 and 18 are side views each schematically showing the first bonding mechanism;
Fig. 19 is a plan view schematically showing the MEA on the electrode layer base material;
Fig. 20 shows a flow of a bonding process performed by the first bonding mechanism;
Fig. 21 is a longitudinal sectional view schematically showing a second subgasket base material processed by a second base material preparation unit;
Fig. 22 is a plan view conceptually showing how a third half-cut part forms a second cut portion in the second subgasket base material;
Fig. 23 is a longitudinal sectional view schematically showing the first base material and the second base material to be bonded to each other by the second bonding mechanism;
Fig. 24 is a longitudinal sectional view schematically showing a base material assembly;
Fig. 25 is a longitudinal sectional view schematically showing a subgasket added MEA obtained from the base material assembly;
Fig. 26 is a schematic perspective view of a gasket applicator according to a second preferred embodiment; and
Fig. 27 is a longitudinal sectional view schematically showing a first base material according to the second preferred embodiment.

### Description of Preferred Embodiments

A manufacturing device and a manufacturing method according to the invention are defined in the appended claims.

Preferred embodiments of the present invention will be described below by referring to the drawings. Constituting elements in the preferred embodiment are described merely as examples, and the scope of the present invention is not to be limited only to these elements. To facilitate understanding, the size of each part or the number of such parts in the drawings may be illustrated in an exaggerated or simplified manner, if appropriate.

### <1. First preferred embodiment>

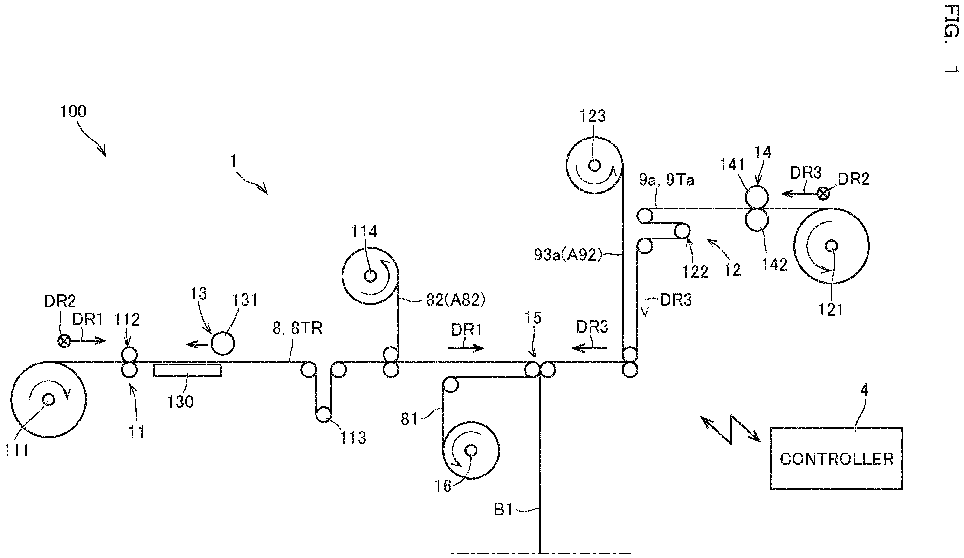

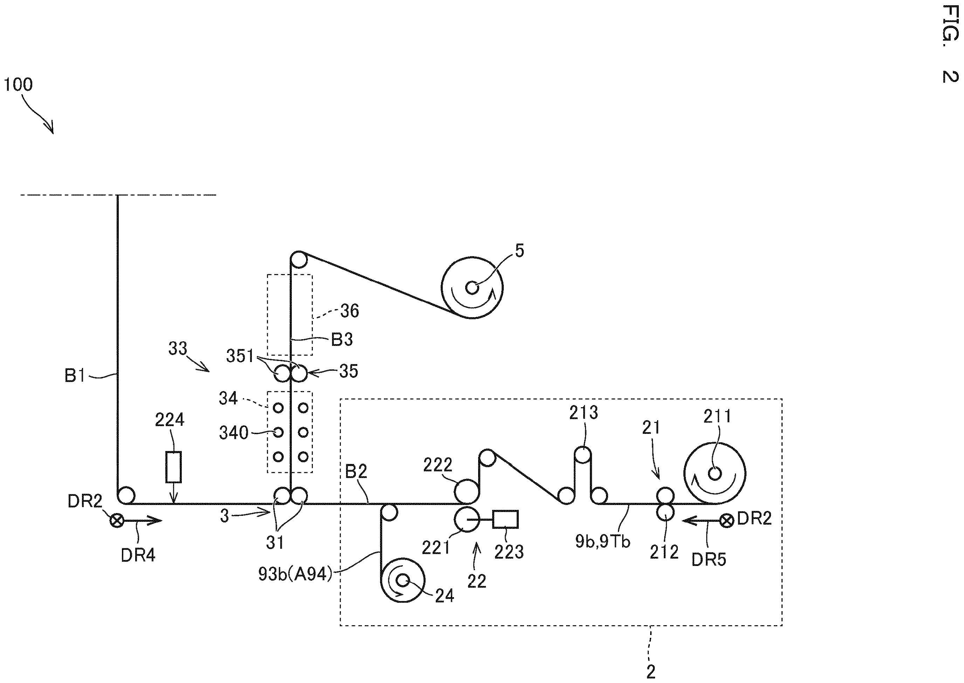

Fig. 1 shows a first base material preparation unit 1 of a gasket applicator 100 according to a first preferred embodiment. Fig. 2 shows a second base material preparation unit 2 and a second bonding mechanism 3 of the gasket applicator 100 according to the first preferred embodiment. The gasket applicator 100 is a device to manufacture a base material assembly B3 including a subgasket added membrane electrode assembly (MEA) 87 in which subgaskets are attached to opposite surfaces of a MEA. As will be described later, the base material assembly B3 has a configuration in which a first base material B1 including a MEA 85 and a first subgasket film 92a and a second base material B2 including a second subgasket film 92b are bonded to each other.

As shown in Figs. 1 and 2, the gasket applicator 100 includes the first base material preparation unit 1, the second base material preparation unit 2, the second bonding mechanism 3 for bonding the first base material B1 and the second base material B2 to each other; a controller 4, and a base material assembly collection roller 5. The first base material preparation unit 1 is to prepare the first base material B1, and the second base material preparation unit 2 is to prepare the second base material B2.

### <First base material preparation unit 1>

The first base material preparation unit 1 includes an electrode layer base material transport mechanism 11, a first subgasket base material transport mechanism 12, a first half-cut part 13, a second half-cut part 14, a first bonding mechanism 15, and a backsheet collection roller 16.

### <Electrode layer base material transport mechanism 11>

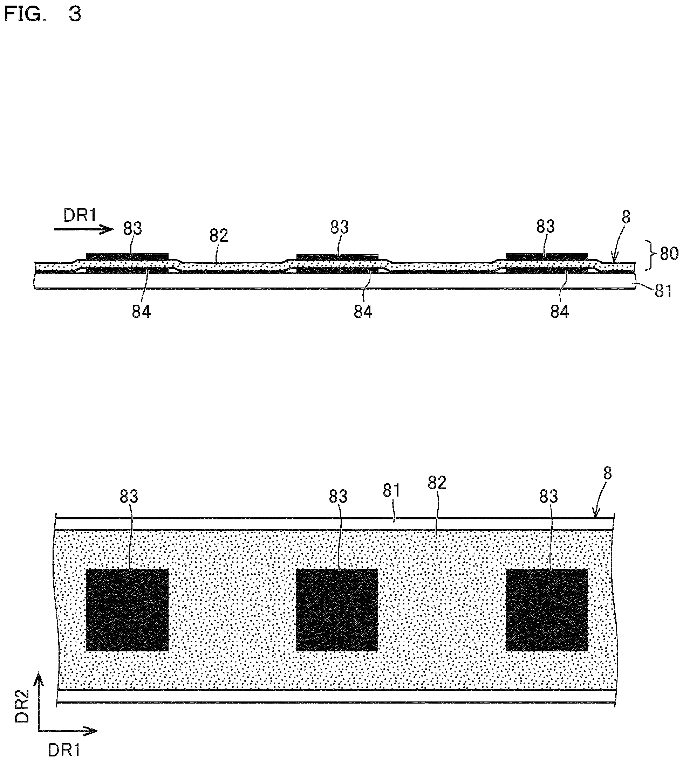

The electrode layer base material transport mechanism 11 transports an elongated strip-shaped electrode layer base material 8 (see Fig. 3) toward the first bonding mechanism 15 along a fixed transport path 8TR while supporting the electrode layer base material 8 with a plurality of rollers. The electrode layer base material transport mechanism 11 includes a first supply roller 111, a first feed roller 112, and a first dancer roller 113. The electrode layer base material transport mechanism 11 includes an electrolyte membrane collection roller 114 that collects a portion (a non-adopted region A82 of an electrolyte membrane 82 described later) by winding detached from the electrode layer base material 8 along the transport path 8TR.

In the following, a movement direction in which the electrode layer base material 8 is moved by the electrode layer base material transport mechanism 11 toward the first bonding mechanism 15 will be called a transport direction DR1, and a direction orthogonal to the transport direction DR1 and parallel to a main surface (a surface of the largest area) of the electrode layer base material 8 will be called a width direction DR2. The transport direction DR1 agrees with the longitudinal direction of the electrode layer base material 8. A direction along the transport path 8TR closer to the first supply roller 111 is defined as an upstream side of the transport direction DR1, and a direction along the transport path 8TR closer to the first bonding mechanism 15 is defined as a downstream side of the transport direction DR1.

Fig. 3 is a longitudinal sectional view (top view) and a plan view (bottom view) schematically showing the electrode layer base material 8 sent from the first supply roller 111. As shown in Fig. 3, the electrode layer base material 8 includes an elongated strip-shaped backsheet 81, and an elongated strip-shaped electrolyte membrane 82 provided on the upper surface of the backsheet 81. The electrolyte membrane 82 has an upper surface on which rectangular first catalyst layers 83 are formed at regular intervals. The electrolyte membrane 82 has a lower surface on which a plurality of second catalyst layers 84 is formed to overlap the respective first catalyst layers 83 in a thickness direction. In the electrode layer base material 8, the second catalyst layer 84 is caught between the electrolyte membrane 82 and the backsheet 81. The electrode layer base material 8 is manufactured in advance by an external device not shown in the drawings, and is prepared in a state of being wound in a roll shape on the first supply roller 111. The electrolyte membrane 82, a plurality of the first catalyst layers 83, and a plurality of the second catalyst layers 84 form a MEA layer 80. The backsheet 81 is attached to the electrolyte membrane 82 in a state of being detachable easily from the electrolyte membrane 82.

For example, a fluorine-based or hydrocarbon-based polyelectrolyte membrane is used as the electrolyte membrane 82. Specific examples of the electrolyte membrane 82 include polyelectrolyte membranes containing perfluorocarbon sulfonic acid (for example, Nafion (registered trademark) available from DuPont US, Flemion (registered trademark) available from AGC Inc., Acipex (registered trademark) available from AGC Inc., and Goreselect (registered trademark) available from W. L. Gore & Associates). The electrolyte membrane 82 has a thickness of from 5 to 30 µm, for example. While the electrolyte membrane 82 swells with moisture in the air, it contracts with reduction in the moisture. Namely, the electrolyte membrane 82 has a property of being deformed easily in response to the moisture in the air.

The backsheet 81 is a film for suppressing the deformation of the electrolyte membrane 82. As a material of the backsheet 81, resin higher in mechanical strength and more excellent in shape retaining function than the electrolyte membrane 82 is used. For example, polyethylene naphthalate (PEN) or polyethylene terephthalate (PET) is used preferably as a material of the backsheet 81. The backsheet 81 has a thickness of from 25 to 100 µm, for example.

As shown in Fig. 3, the backsheet 81 has a width slightly greater than the width of the electrolyte membrane 82. The electrolyte membrane 82 is formed at the center of the backsheet 81 in the width direction. The first catalyst layer 83 and the second catalyst layer 84 have a width less than the width of the electrolyte membrane 82. The first catalyst layer 83 and the second catalyst layer 84 are formed at the center of the upper surface and the center of the lower surface respectively of the electrolyte membrane 82 in the width direction.

A material to cause electrochemical reaction at an anode or a cathode of a polymer electrolyte fuel cell is used as a material of the first and second catalyst layers 83 and 84. For example, catalyst particles of platinum (Pt), a platinum alloy, or a platinum compound are used as a material of the first and second catalyst layers 83 and 84. For example, the platinum alloy may be an alloy of at least one type of metals selected from a group constituting of ruthenium (Ru), palladium (Pd), nickel (Ni), molybdenum (Mo), iridium (Ir), and Iron (Fe), and platinum. Generally, platinum is used as a material of a catalyst layer for a cathode, and a platinum alloy is used as a catalyst layer for an anode.

As shown in Fig. 1, the first feed roller 112 includes two roller bodies arranged to contact each other. In the first feed roller 112, while the electrode layer base material 8 is caught between these two roller bodies, the two roller bodies rotate to pull out the electrode layer base material 8 from the first supply roller 111. The first feed roller 112 is configured to be capable of rotating actively in response to a control signal from the controller 4. When the rotation of the first feed roller 112 is stopped, sending of the electrode layer base material 8 from the first supply roller 111 is stopped to stop transport of the electrode layer base material 8 into the first half-cut part 13 and transport of the electrode layer base material 8 out of the first half-cut part 13.

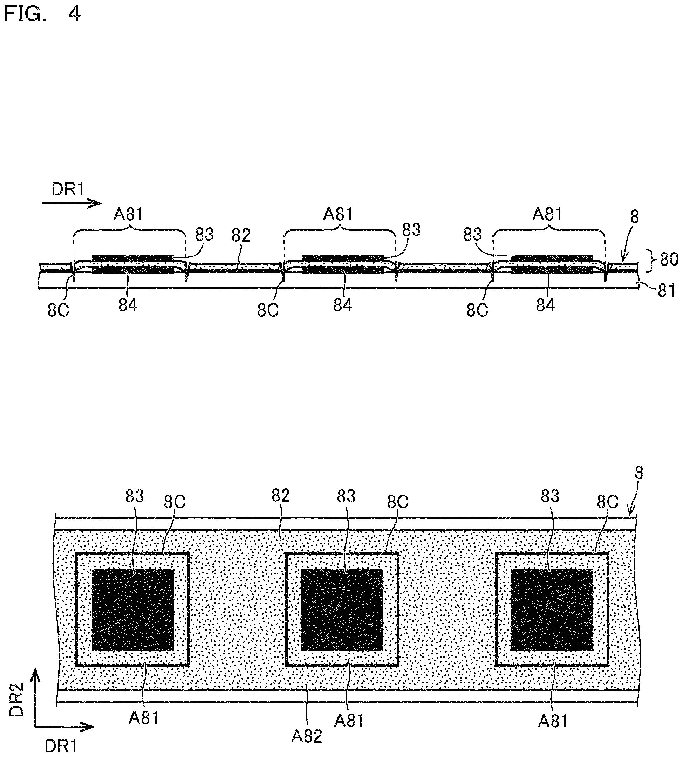

Fig. 4 is a longitudinal sectional view (top view) and a plan view (bottom view) schematically showing the electrode layer base material 8 with a cut portion 8C. The first half-cut part 13 is arranged downstream from the first feed roller 112. As shown in Fig. 4, the first half-cut part 13 is a processing part that performs a process of cutting the MEA layer 80 of the electrode layer base material 8 sent from the first supply roller 111 into an adopted region A81 and a non-adopted region A82 (this process will be called a "first half-cut process"). The configuration of the first half-cut part 13 will be described later.

As shown in Fig 4, the cut portion 8C is formed by cutting the electrolyte membrane 82 into a rectangular shape surrounding a single first catalyst layer 83 and a single second catalyst layer 84 on the back side of this first catalyst layer 83. The cut portion 8C is defined by a cutting plane of the electrolyte membrane 82 from the upper surface to the lower surface thereof. The cut portion 8C does not penetrate the backsheet 81 and is defined by a cutting plane extending from the upper surface to an intermediate portion of the backsheet 81 in the thickness direction. Namely, the cut portion 8C does not reach the lower surface of the backsheet 81.

In order to apply constant tension on the electrode layer base material 8, the first dancer roller 113 moves up and down (in a direction orthogonal to the main surface of the electrode layer base material 8) in response to tension on the electrode layer base material 8. By the upward and downward movement of the first dancer roller 113, abrupt variation in the tension on the electrode layer base material 8 is absorbed.

The electrolyte membrane collection roller 114 collects a portion of the non-adopted region A82 of the electrode layer base material 8 from the MEA layer 80 by winding. The non-adopted region A82 is a portion of the elongated strip-shaped electrolyte membrane 82 other than the adopted region A81. The non-adopted region A82 of the electrolyte membrane 82 is detached from the electrode layer base material 8 at a position downstream from the first half-cut part 13, and is then wound on the electrolyte membrane collection roller 114.

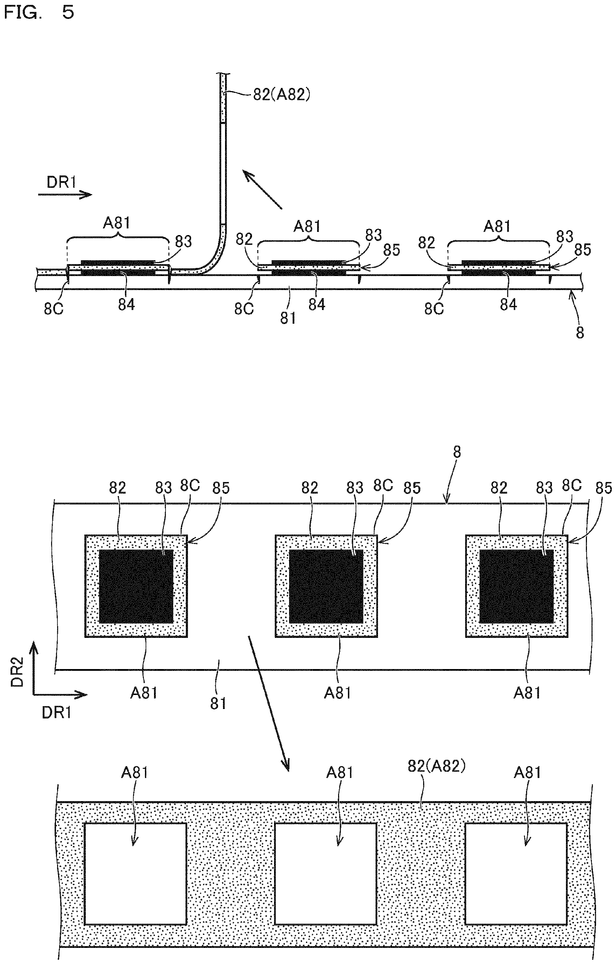

Fig. 5 is a longitudinal sectional view (top view) and a plan view (bottom view) schematically showing the electrode layer base material 8 from which the non-adopted region A82 of the MEA layer 80 is separated. As shown in Fig. 5, after the electrolyte membrane collection roller 114 collects the non-adopted region A82 of the electrolyte membrane 82 from the electrode layer base material 8, the MEA 85 is left on the upper surface of the backsheet 81. Namely, the MEA 85 includes the adopted region A81 of the electrolyte membrane 82, and a single first catalyst layer 83 and a single second catalyst layer 84 formed on the upper surface and the lower surface respectively of the adopted region A81 of the electrolyte membrane 82. The MEA 85 is transported together with the backsheet 81 toward the first bonding mechanism 15.

### <First subgasket base material transport mechanism 12>

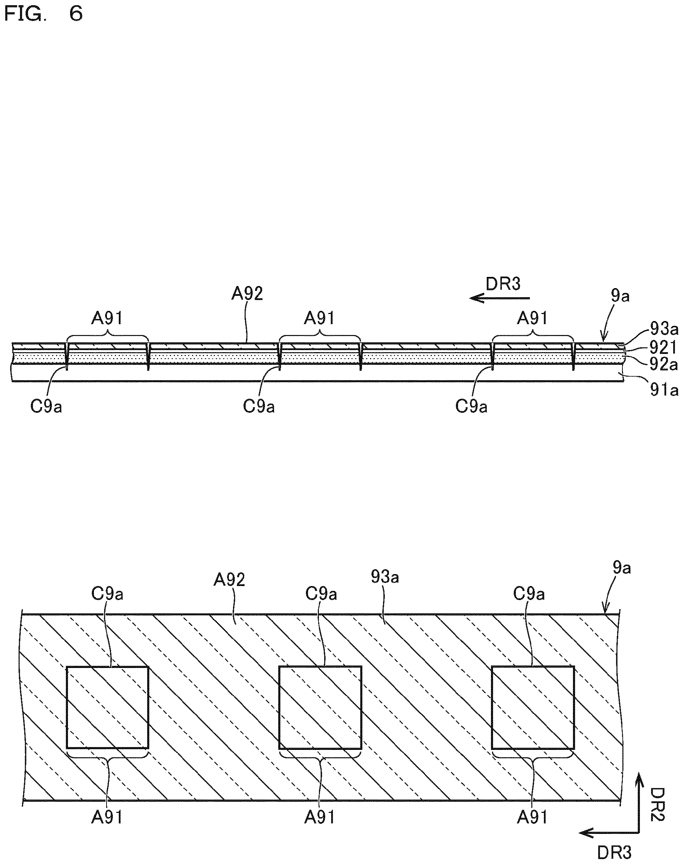

The first subgasket base material transport mechanism 12 transports the elongated strip-shaped first subgasket base material 9a (see Fig. 6) toward the first bonding mechanism 15 along a fixed transport path 9Ta while supporting the first subgasket base material 9a with a plurality of rollers. In the first preferred embodiment, a movement direction in which the first subgasket base material 9a is moved by the first subgasket base material transport mechanism 12 toward the first bonding mechanism 15 will be called a transport direction DR3. A side along the transport path 9Ta closer to a second supply roller 121 is defined as an upstream side of the transport direction DR3, and a side along the transport path 9Ta closer to the first bonding mechanism 15 is defined as a downstream side of the transport direction DR3. The transport direction DR3 agrees with the longitudinal direction of the first subgasket base material 9a. A direction orthogonal to the transport direction DR3 and parallel to a main surface (a surface of the largest area) of the first subgasket base material 9a agrees with the width direction DR2.

The first subgasket base material transport mechanism 12 includes the second supply roller 121 and a second dancer roller 122. The first subgasket base material transport mechanism 12 further includes a first cover film collection roller 123 that collects an unnecessary portion (non-corresponding region A92) of a first cover film 93a by winding detached from the first subgasket base material 9a on the transport path 9Ta.

Fig. 6 is a longitudinal sectional view (top view) and a plan view (bottom view) schematically showing the first subgasket base material 9a. The first subgasket base material 9a shown in Fig. 6 is provided with a first cut portion C9a. The first cut portion C9a is to be formed by the second half-cut part 14 described later and does not exist immediately after feeding from the second supply roller 121.

As shown in Fig. 6, the first subgasket base material 9a includes an elongated strip-shaped first backsheet 91a, the elongated strip-shaped first subgasket film 92a formed on the upper surface of the first backsheet 91a, and the elongated strip-shaped first cover film 93a formed on the upper surface of the first subgasket film 92a. The first subgasket base material 9a is manufactured in advance by an external device not shown in the drawings, and is prepared in a state of being wound in a roll shape on the second supply roller 121.

As a material of the first backsheet 91a, polyethylene naphthalate (PEN) or polyethylene terephthalate (PET) is used preferably, for example. The first backsheet 91a has a thickness of from 25 to 100 µm, for example. As a material of the first subgasket film 92a, resin higher in mechanical strength and more excellent in shape retaining function than the electrolyte membrane 82 is used preferably. More specifically, polyethylene terephthalate (PET), polyethylene naphthalate (PEN), polyphenylene sulfide (PPS), or polystyrene (PS) is used preferably as a material of the first subgasket film 92a. The first subgasket film 92a has a thickness of from 25 to 100 µm, for example. While a material of the first cover film 93a is not particularly limited, polyethylene terephthalate (PET) is used preferably, for example.

In the first subgasket base material 9a, an adhesive layer (not shown in the drawings) containing an adhesive is interposed between the first backsheet 91a and the first subgasket film 92a. As shown in Fig. 6, an adhesive layer 921 containing an adhesive is formed on a surface of the first subgasket film 92a adjacent to the first cover film 93a. Preferably, the adhesive in the adhesive layer 921 is a pressure-sensitive adhesive, a thermosetting adhesive, a thermoplastic adhesive, or a UV-curable adhesive. The first cover film 93a is adhesively bonded by the adhesive layer 921 under adhesive force of a degree allowing the first cover film 93a to be detached easily from the first subgasket film 92a.

In order to apply constant tension on the first subgasket base material 9a, the second dancer roller 122 moves from side to side (in a direction orthogonal to the main surface of the first subgasket base material 9a) in response to tension on the first subgasket base material 9a. By the side-to-side movement of the second dancer roller 122, abrupt variation in the tension on the first subgasket base material 9a is absorbed.

The second half-cut part 14 is provided between the second supply roller 121 and the second dancer roller 122. The second half-cut part 14 performs a process of cutting the first cover film 93a and the first subgasket film 92a of the first subgasket base material 9a into a corresponding region A91 and a non-corresponding region A92 (second half-cut process).

As shown in Fig. 6, the second half-cut process is to form the first cut portion C9a in the first subgasket base material 9a. The first cut portion C9a is formed along a boundary line (cutting target line L9a) between the rectangular corresponding region A91 and the non-corresponding region A92 other than the corresponding region A91. The corresponding region A91 has a similar shape and has a substantially equal size to the first catalyst layer 83, for example. The corresponding region A91 may be dissimilar in shape to the first catalyst layer 83. The corresponding region A91 may be larger than the first catalyst layer 83.

In this example, the second half-cut part 14 includes two upper and lower rollers 141 and 142 facing each other, and the first subgasket base material 9a is passed between these two rollers 141 and 142. A pinnacle blade is provided on the outer peripheral surface of the roller 141 facing the first cover film 93a of the first subgasket base material 9a. This pinnacle blade has a shape responsive to the shape (rectangular shape) of the corresponding region A91.

In the second half-cut part 14, the first subgasket base material 9a is caught between the two rollers 141 and 142. Each of the rollers 141 and 142 rotates synchronously with a speed at which the first subgasket base material 9a moves in the transport direction DR3. As the pinnacle blade on the outer peripheral surface of the roller 141 abuts on the first subgasket base material 9a, the first cut portion C9a is formed in the first subgasket base material 9a. In this way, the first subgasket base material 9a is cut into the corresponding region A91 and the non-corresponding region A92. The roller 141 has an outer peripheral length agreeing with an interval between the first cut portions C9a (in other words, an interval between the corresponding regions A91) formed in the first subgasket base material 9a. For this reason, by the rotations of the rollers 141 and 142 synchronous with the movement of the first subgasket base material 9a, the first cut portions C9a are formed at a constant pitch in the first subgasket base material 9a. Each of the rollers 141 and 142 is not always required to rotate at a speed synchronous with a movement speed of the first subgasket base material 9a. For example, when the pinnacle blade abuts on the first subgasket base material 9a, the roller 141 is rotated at a speed synchronous with a movement speed of the first subgasket base material 9a. When the pinnacle blade does not contact the first subgasket base material 9a, the roller 141 may be rotated at a higher speed than the movement speed of the first subgasket base material 9a. This makes it possible to shorten an interval between the first cut portions C9a formed in the first subgasket base material 9a to allow loss reduction in the first subgasket base material 9a.

The rollers 141 and 142 may be driven to rotate by frictional resistance generated by friction with the first subgasket base material 9a. In this case, the rollers 141 and 142 rotate synchronously with a movement speed of the first subgasket base material 9a to eliminate the need for synchronous control by the controller 4. At least one of the rollers 141 and 142 may have a configuration of rotating actively in response to driving by a motor. In this case, the controller 4 may control the rotations of the rollers 141 and 142 to conform to a speed at which the first subgasket base material 9a is moved by the first subgasket base material transport mechanism 12.

As shown in Fig. 6, the first cut portion C9a is defined by a cutting plane of the first cover film 93a and the first subgasket film 92a. The first cut portion C9a does not penetrate the first backsheet 91a and is defined by a cutting plane extending from the upper surface to an intermediate portion of the first backsheet 91a in the thickness direction. Namely, the first cut portion C9a does not reach the lower surface of the first backsheet 91a.

The first cover film collection roller 123 collects a portion of the non-corresponding region A92 of the first cover film 93a from the first subgasket base material 9a with the first cut portion C9a by winding. The non-corresponding region A92 of the first cover film 93a is detached from the first subgasket base material 9a at a position between the second dancer roller 122 and the first bonding mechanism 15 along the transport path 9Ta, and is then collected on the first cover film collection roller 123. The first cover film collection roller 123 is an example of a detachment part.

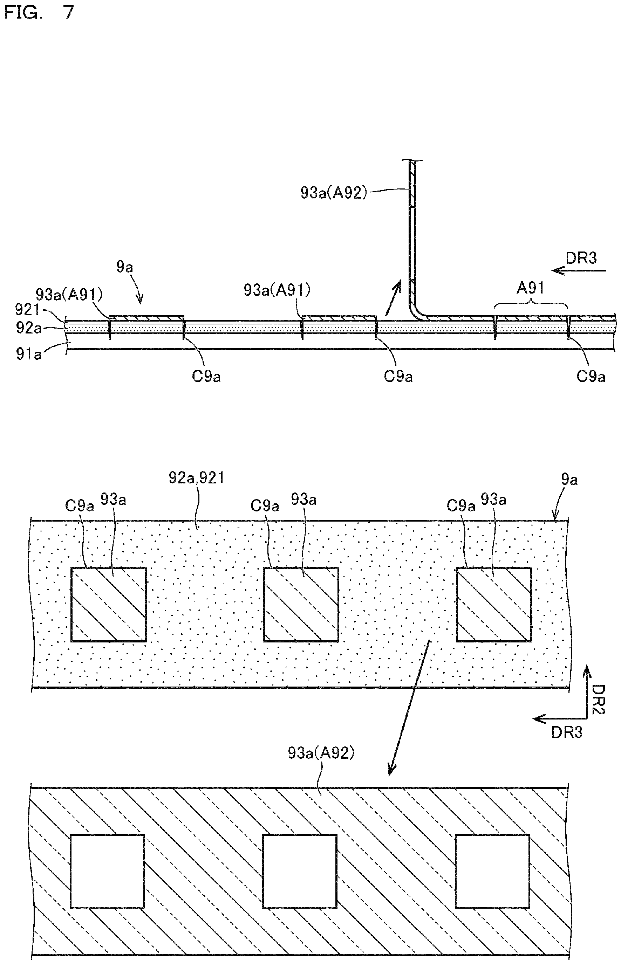

Fig. 7 is a longitudinal sectional view (top view) and a plan view (bottom view) schematically showing the first subgasket base material 9a from which the non-corresponding region A92 of the first cover film 93a is separated. As shown in Fig. 7, as a result of separation of the non-corresponding region A92 of the first cover film 93a, a rectangular portion that is the corresponding region A91 of the first cover film 93a is left on the upper surface of the first subgasket film 92a. This rectangular portion is transported together with the first backsheet 91a and the first subgasket film 92a to the first bonding mechanism 15.

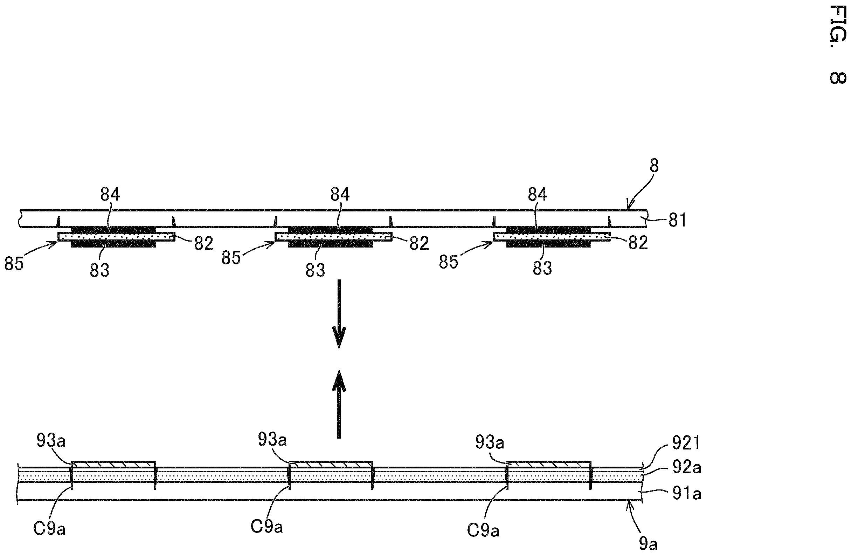

Fig. 8 is a longitudinal sectional view schematically showing the electrode layer base material 8 and the first subgasket base material 9a to be bonded to each other by the first bonding mechanism 15. As shown in Fig. 8, the first bonding mechanism 15 bonds the electrode layer base material 8 and the first subgasket base material 9a to each other. The electrode layer base material 8 is in a state from which the non-adopted region A82 of the electrolyte membrane 82 is separated (see Fig. 5). The first subgasket base material 9a is in a state from which the non-corresponding region A92 of the first cover film 93a is separated. In this example, the electrode layer base material 8 and the first subgasket base material 9a are bonded to each other in such a manner as to align the upper surface of the first catalyst layer 83 of the MEA 85 at the electrode layer base material 8 with the upper surface of the first cover film 93a of the first subgasket base material 9a. The electrolyte membrane 82 forming a part of the MEA 85 at the electrode layer base material 8 and existing in the periphery of the first catalyst layer 83 is adhesively bonded to a surface (adhesive surface) of the first subgasket film 92a existing in the periphery of the first cover film 93a at the first subgasket base material 9a.

In the first preferred embodiment, the first subgasket base material 9a has the first cut portion C9a formed in the corresponding region A91 corresponding to the first catalyst layer 83 while extending to an intermediate portion of the first backsheet 91a in the thickness direction, and the first subgasket base material 9a is bonded to the electrode layer base material 8. Namely, the first subgasket base material 9a is bonded to the electrode layer base material 8 while the corresponding region A91 is not cut out from the first subgasket base material 9a. This makes it possible to maintain high rigidity of the first subgasket film 92a before the bonding to reduce the occurrence of creases in the first subgasket film 92a.

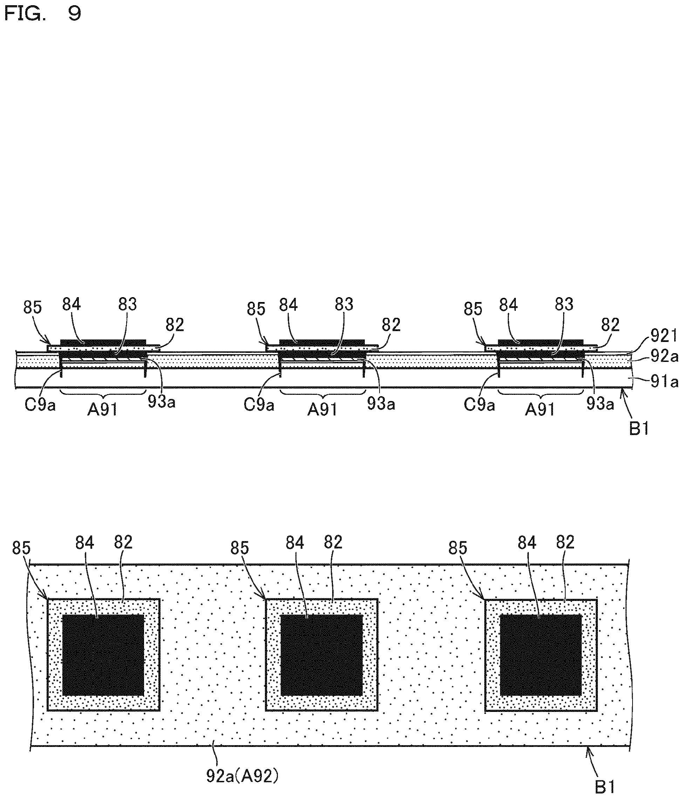

The backsheet collection roller 16 collects the backsheet 81 by winding detached from the electrode layer base material 8 after the electrode layer base material 8 is bonded to the first subgasket base material 9a by the first bonding mechanism 15. The backsheet 81 is detached from the electrode layer base material 8 at a position between the first bonding mechanism 15 and the backsheet collection roller 16. As a result, the first base material B1 is formed (see Fig. 9). The first base material B1 includes, in sequence from one side to an opposite side, the first backsheet 91a, the first subgasket film 92a, and the MEA 85 including the electrolyte membrane 82 having a surface on the one side where the first catalyst layer 83 is formed and a surface on the opposite side where the second catalyst layer 84 is formed. The first base material B1 further includes the first cover film 93a (corresponding region A91) having a shape corresponding to the first catalyst layer 83 and formed between the first subgasket film 92a and the first catalyst layer 83.

The first base material B1 formed by the first bonding mechanism 15 is transported to the second bonding mechanism 3. A direction in which the first base material B1 moves from the first bonding mechanism 15 toward the second bonding mechanism 3 will be called a transport direction DR4. The transport direction DR4 agrees with the longitudinal direction of the first base material B1. A direction orthogonal to the transport direction DR4 and parallel to a main surface of the first base material B1 agrees with the width direction DR2.

Fig. 9 is a longitudinal sectional view (top view) and a plan view (bottom view) schematically showing the first base material B1. The first base material B1 has a configuration in which the first subgasket base material 9a is attached to one side of the MEA 85. In the first base material B1, the corresponding region A91 of the first subgasket film 92a, and additionally, the corresponding region A91 of the first cover film 93a are applied to the first catalyst layer 83, as well as to the periphery of the first catalyst layer 83 of the MEA 85. This achieves higher rigidity of the MEA 85 including the electrolyte membrane 82 and the first catalyst layer 83 (further including the second catalyst layer 84). As a result, it becomes possible to reduce the occurrence of deformation such as creases in the MEA 85.

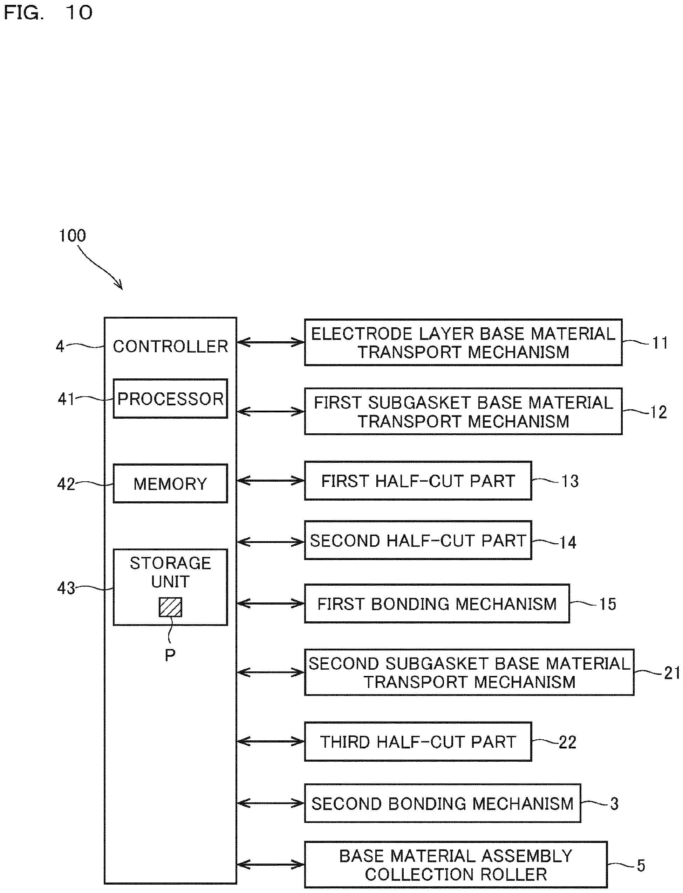

Fig. 10 is a block diagram showing electrical connection between the controller 4 and each unit in the subgasket applicator 100. The controller 4 is configured using a computer including a processor 41 such as a CPU, a memory 42 such as a RAM, and a storage unit 43 such as a hard disk drive. The storage unit 43 stores a computer program P installed for controlling the operation of the gasket applicator 100. The controller 4 controls the operation of each unit in the gasket applicator 100. More specifically, the controller 4 is electrically connected to the electrode layer base material transport mechanism 11, the first subgasket base material transport mechanism 12, the first half-cut part 13, the second half-cut part 14, the first bonding mechanism 15, a second subgasket base material transport mechanism 21, a third half-cut part 22 (cutting mechanism), the second bonding mechanism 3, and the base material assembly collection roller 5.

### <First half-cut part 13>

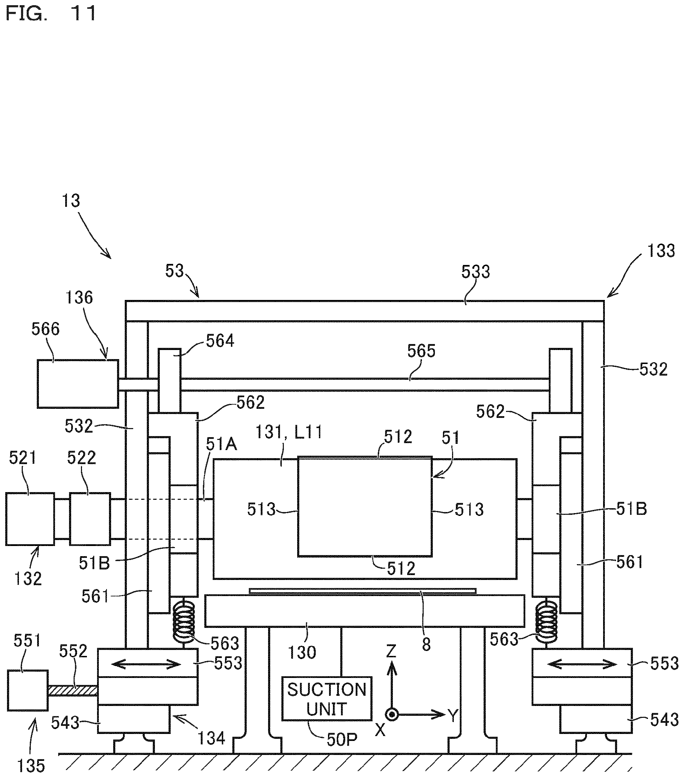

The configuration of the first half-cut part 13 will be described by referring to Figs. 11 to 14. For the convenience of description, arrows indicating an X direction, a Y direction, and a Z direction orthogonal to each other are given in Figs. 11 to 14. In the following description, a direction in which the tip of each arrow is pointed is defined as a + direction (positive direction), and a direction opposite to the former direction is defined as a - direction (negative direction). The X direction is parallel to the transport direction DR1, the Y direction is parallel to the width direction DR2, and the Z direction is vertical to the upper surface of the electrode layer base material 8. In this example, the X direction and the Y direction are parallel to a horizontal plane, and the Z direction is parallel to the vertical direction.

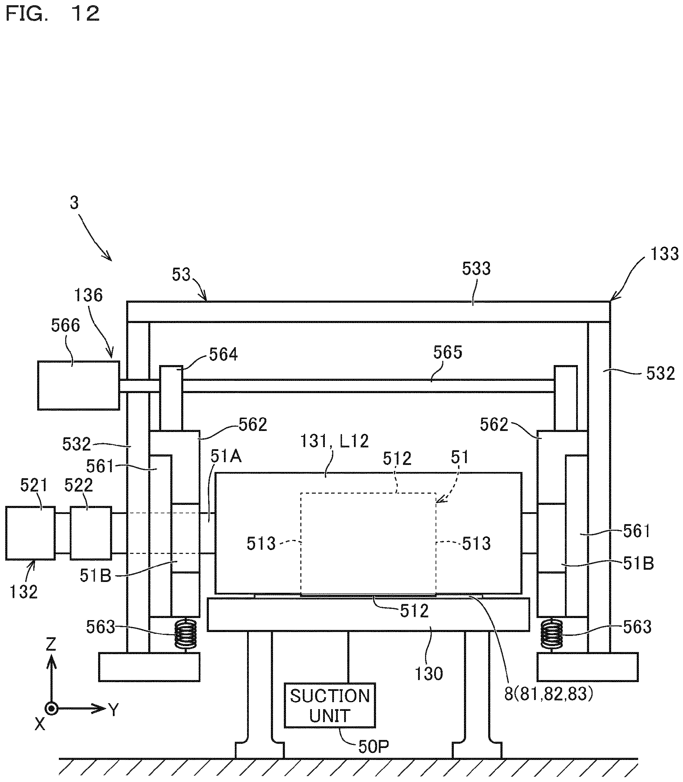

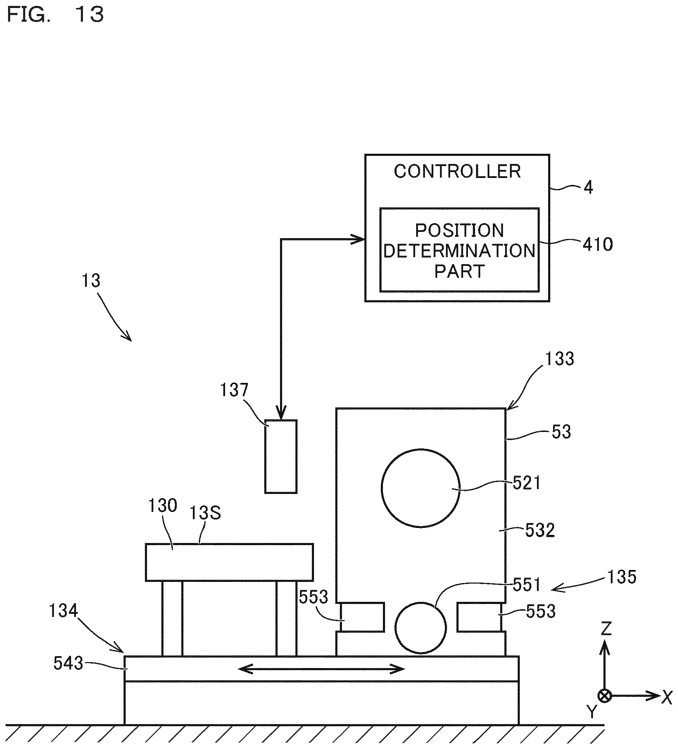

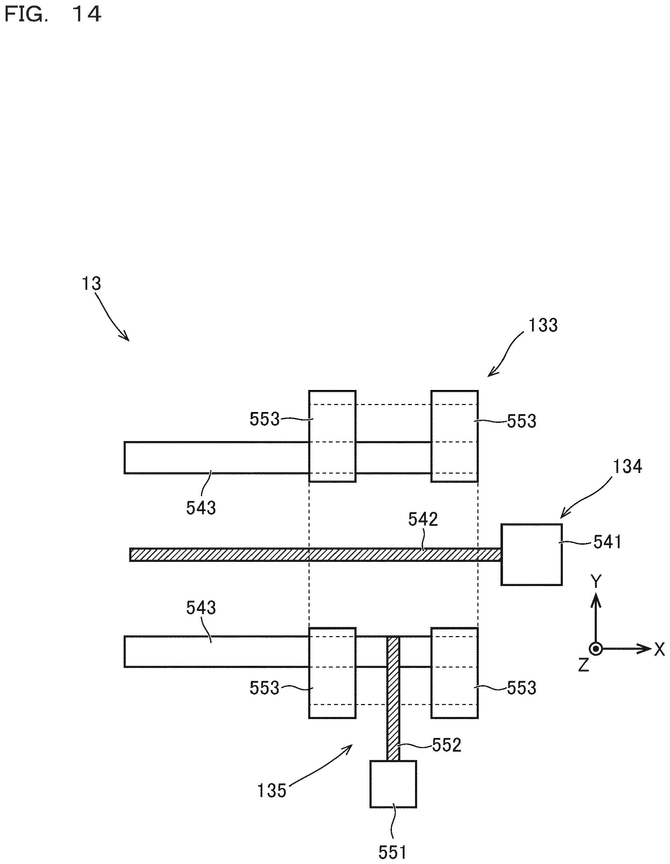

Fig. 11 schematically shows the first half-cut part 13 on the +X side. Fig. 12 schematically shows the first half-cut part 13 on the +X side. Fig. 13 schematically shows the first half-cut part 13 on the -Y side. Fig. 14 schematically shows an X direction drive section 134 of the first half-cut part 13.

The first half-cut part 13 is a device that performs the first half-cut process of forming the rectangular cut portion 8C (see Fig. 4) in the electrode layer base material 8 moving in the transport direction DR1. The first half-cut part 13 includes a suction stage 130, a rotary die cutter 131, a rotary driver part 132, and a movement drive part 133.

The suction stage 130 holds the electrode layer base material 8 under suction from the backsheet 81. A suction surface (+Z surface) of the suction stage 130 has a rectangular shape extending long in the X direction and extending short in the Y direction.

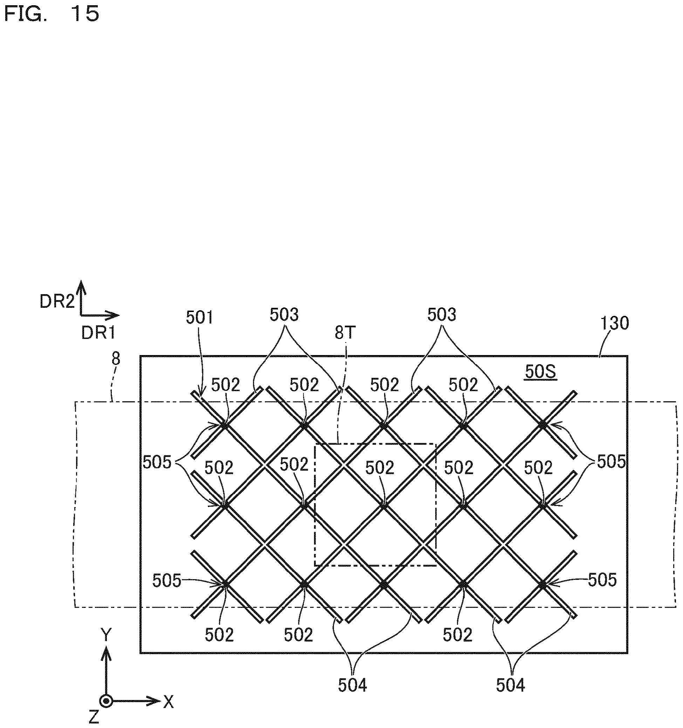

The rotary die cutter 131 is a cylindrical member to rotate about a rotary shaft 51A extending in the Y direction. The rotary die cutter 131 has an outer peripheral surface where a pinnacle blade 51 is provided. The pinnacle blade 51 is used for forming the cut portion 8C in the electrode layer base material 8 along a cutting target line 8T (see Fig. 15) around the first catalyst layer 83 of the electrode layer base material 8. In this example, the cut portion 8C has a square shape. For this reason, the pinnacle blade 51 is defined by two width direction portions 512 extending parallel to each other in the Y direction (width direction DR2), and two peripheral direction portions 513 extending parallel to each other in the peripheral direction of the rotary die cutter 131.

The movement drive part 133 includes a bridge-like body 53 holding the rotary die cutter 131, the X direction drive section 134 that moves the bridge-like body 53 in the X direction, a Y direction drive section 135 that moves the bridge-like body 53 in the Y direction, and a Z direction drive section 136 that moves the rotary die cutter 131 in the Z direction.

The bridge-like body 53 includes two columns 532 extending in the Z direction and arranged on the +Y side and the -Y side of the suction stage 130, and a beam 533 coupling the respective ends on the +Z side of the two columns 532. The rotary die cutter 131 is arranged between the two columns 532.

The movement drive part 133 moves the rotary die cutter 131 at least to a separated position L11 (see Fig. 11) and to a half-cut position L12 (see Fig. 12). As shown in Fig. 11, the rotary die cutter 131 at the separated position L11 is separated upward (+Z side) from the electrode layer base material 8 passing along the transport path 8TR above the suction stage 130. As shown in Fig. 12, with the rotary die cutter 131 at the half-cut position L12, by the rotation of the rotary die cutter 131, the pinnacle blade 51 contacts on the upper surface of the electrode layer base material 8 sucked on the suction stage 130. In this way, the cut portion 8C is ready to be formed.

### <Z direction drive section 136>

The Z direction drive section 136 includes one Z direction guide 561, one lifting plate 562, one spring 563, and one eccentric cam 564 provided on each of the +Y side and the -Y side of the rotary die cutter 131. The Z direction drive section 136 includes a rotary shaft 565 extending in the Y direction, and the Z direction motor 566 to rotate the rotary shaft 565. The two eccentric cams 564 are attached to the rotary shaft 565.

The spring 563 is arranged between the lifting plate 562 and the Y direction guide 553 arranged closer to the -Z side than the lifting plate 562. The spring 563 is coupled to an end of the lifting plate 562 on the -Z side and biases the lifting plate 562 toward the +Z side. An end of the lifting plate 562 on the +Z side abuts on an end of the outer peripheral surface (cam surface) of the eccentric cam 564 on the -Z side. As the eccentric cam 564 rotates together with the rotary shaft 565, an end of the eccentric cam 564 on the -Z side is displaced in the Z direction. This changes the position of the lifting plate 562 pressed with the eccentric cam 564 also in the Z direction. The lifting plate 562 is coupled to the Z direction guide 561 extending in the Z direction and is displaced parallel to the vertical direction by the Z direction guide 561.

The opposite ends of the rotary shaft 51A of the rotary die cutter 131 are supported by the lifting plate 562 via a bearing 51B. Thus, the rotary die cutter 131 is moved in the Z direction together with the lifting plate 562.

### <Y direction drive section 135>

The Y direction drive section 135 includes a Y direction motor 551 that is a servo motor, a ball screw 552 extending in the Y direction, and four Y direction guides 553 extending in the Y direction (see Fig. 14). A portion of the bridge-like body 53 on the -Z side is coupled to each of the Y direction guides 553. The ball screw 552 is coupled to a nut member provided to a surface of the bridge-like body 53 on the -Y side (see Figs. 11 and 13). As the Y direction motor 551 rotates the ball screw 552, the bridge-like body 53 moves in the Y direction along the Y direction guides 553. This moves the rotary die cutter 131 in the Y direction.

### <X direction drive section 134>

The X direction drive section 134 includes an X direction motor 541 that is a servo motor, a ball screw 542 extending in the X direction, and two X direction guides 543 extending parallel to the X direction. The ball screw 542 is coupled to a surface of the bridge-like body 53 on the +X side. As the X direction motor 541 rotates the ball screw 542, the bridge-like body 53 moves in the X direction along the X direction guide 543. This moves the rotary die cutter 131 in the X direction.

### <Rotary driver part 132>

The rotary driver part 132 rotates the rotary die cutter 131 by rotating the rotary shaft 51A. The rotary driver part 132 includes a rotary motor 521 and a clutch 522.

The rotary motor 521 is coupled to an end of the rotary shaft 51A on the -Y side. As the rotary motor 521 rotates the rotary shaft 51A, the rotary die cutter 131 rotates about the rotary shaft 61A. The opposite portions of the rotary shaft 51A are supported by the lifting plates 562 on the +Y side and on the -Y side via the bearings 51B.

The clutch 522 is provided on the rotary shaft 51A between the rotary motor 521 and the rotary die cutter 131. The rotary shaft 51A is divided by the clutch 522 into a drive shaft (a shaft section closer to the rotary motor 521 than the clutch 522) and a driven shaft (a shaft section closer to the rotary die cutter 131 than the clutch 522). Connecting and disconnecting the drive shaft and the driven shaft using the clutch 522 allows switching between transmission and non-transmission of rotary drive power from the rotary motor 521 to the rotary die cutter 131. The clutch 522 is not an absolute necessity and omissible.

The column 532 of the bridge-like body 53 on the -Y side has a through hole (not shown in the drawings) penetrating the column 532 in the Y direction and where the rotary shaft 51A is passed. This through hole has a shape allowing lifting movement of the rotary shaft 51A such as an oval shape extending long in the Z direction.

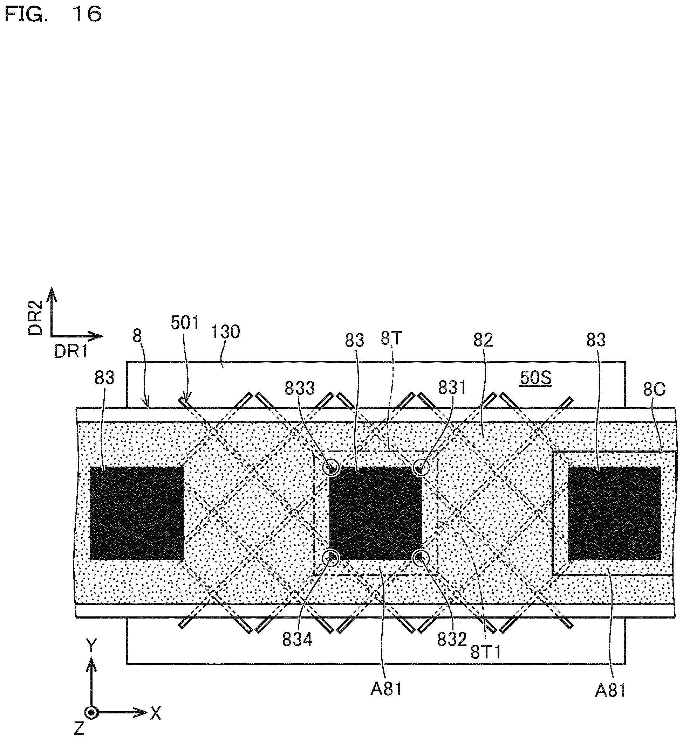

Fig. 15 is a plan view showing a suction surface 13S of the suction stage 130. Fig. 16 is a plan view showing the electrode layer base material 8 sucked on the suction surface 13S of the suction stage 130. The suction surface 13S (surface on the +Z side) of the suction stage 130 for suction of the electrode layer base material 8 is provided with a suction groove 501. A plurality of suction holes 502 for suction of atmosphere is provided inside the suction groove 501.

The suction groove 501 includes a plurality of first recesses 503 extending in the +Y direction toward the +X direction, and a plurality of second recesses 504 extending in the -Y direction toward the +X direction. These first recesses 503 and second recesses 504 intersect at a plurality of intersections 505 and are coupled to each other at the intersections 505. In the first preferred embodiment, some of these intersections 505 are given the suction holes 502. Forming two or more suction holes 502 is not an absolute necessity and there may be one suction hole 502.

The suction hole 502 is connected via a suction pipe not shown in the drawings to a suction unit 50P (see Fig. 11) including a vacuum pump, etc. By the action of the suction unit 50P, surrounding atmosphere is sucked through the suction hole 502. The controller 4 controls a valve (not shown in the drawings) provided to the suction pipe to control start and stop of suction of atmosphere through the suction hole 502. When the controller 4 starts suction of atmosphere through the suction hole 502, the electrode layer base material 8 is sucked on the suction surface 13S of the suction stage 130. When the controller 4 stops suction of atmosphere through the suction hole 502, the electrode layer base material 8 is released from the suction to be separated upward (+Z side) from the suction stage 130.

The cutting target line 8T corresponding to the cut portion 8C formed in the electrode layer base material 8 by the first half-cut part 13 has a rectangular shape with portions parallel to the X direction and portions parallel to the Y direction. The suction groove 501 includes the first recesses 503 and the second recesses 504 intersecting the portions parallel to the X direction and the portion parallel to the Y direction of the cutting target line 8T.

In the half-cut part 13, as the electrode layer base material 8 is sucked on the suction stage 130 along the suction groove 501 during implementation of the first half-cut process, deviation of the electrode layer base material 8 is alleviated. The suction groove 501 includes a plurality of the first recesses 503 and a plurality of the second recesses 504 extending in directions intersecting the cutting target line 8T. This allows the electrode layer base material 8 to be held along the suction groove 501 crossing each portion of the cutting target line 8T in the electrode layer base material 8. Thus, even with the pinnacle blade 51 abutting on the electrode layer base material 8, a corresponding abutting portion of the electrode layer base material 8 can still be held fixedly on the suction stage 130. This allows the cut portion 8C to be formed precisely along the cutting target line 8T in the electrode layer base material 8.

As shown in Fig. 13, the first half-cut part 13 includes an imaging part 137. The imaging part 137 is arranged closer to the +Z side than the suction surface 13S of the suction stage 130. The imaging part 137 includes one, or two or more cameras with image sensors. The imaging part 137 captures an image of the first catalyst layer 83 at the electrode layer base material 8 sucked on the suction stage 130. The imaging part 137 is electrically connected to the controller 4, and transmits an image signal resulting from imaging to the controller 4.

As shown in Fig. 13, the controller 4 functions as a position determination part 410. The position determination part 410 is a function realized as software by causing the processor 41 to execute the computer program P. The position determination part 410 may be a hardware configuration such as an application-specific integrated circuit. The position determination part 410 determines the position of the first catalyst layer 83 (a barycenter position, for example) in an image acquired by the imaging part 137. Further, the controller 4 sets the cutting target line 8T on the basis of the determined position of the first catalyst layer 83 and operates the movement drive part 133 in response to the set cutting target line 8T, thereby moving the rotary die cutter 131.

As shown in Fig. 16, for example, the position determination part 410 may determine four corners 831, 832, 833, and 834 of the first catalyst layer 83, and determine the barycenter position of the first catalyst layer 83 on the basis of the determined corner positions. In this case, the imaging part 137 may capture images of the corners 831 to 834 using a plurality of cameras. The imaging part 137 may capture images of the corners 831 to 834 simultaneously using one camera, or may acquire these images separately by imaging performed several times by moving this camera.

The position determination part 410 is not always required to determine the position of the first catalyst layer 83 on the basis of the positions of the corners 831 to 834. For example, the position determination part 410 may determine the positions of the four sides of the first catalyst layer 83, and may determine the position of the first catalyst layer 83 on the basis of the determined side positions.

The position determination part 410 may determine the position of the second catalyst layer 84. If the backsheet 81 has transparency, for example, the imaging part 137 may be arranged adjacent to the backsheet 81 of the electrode layer base material 8 and an image of the second catalyst layer 84 may be captured using the imaging part 137. In this case, the controller 4 can set the cutting target line 8T properly on the basis of the position of the second catalyst layer 84.

The position determination part 410 may determine the respective positions of the first and second catalyst layers 83 and 84, and the controller 4 may set the cutting target line 8T on the basis of the determined positions. In this case, the controller 4 may set the cutting target line 8T using a midpoint between the barycenter position of the first catalyst layer 83 and the barycenter position of the second catalyst layer 84 as a reference.

If the first or second catalyst layer 83 or 84 in the electrode layer base material 8 has a defect such as malformation, the controller 4 may skip the first half-cut process by the first half-cut part 13 for such a defective product. In this case, an interval between implementations of the first half-cut process on the electrode layer base material 8 may not be an equal pitch.

The first or second catalyst layer 83 or 84 may be subjected to nondefective inspection when the first or second catalyst layer 83 or 84 is formed on the electrolyte membrane 82, for example. In this case, management data indicating nondefective/defective of each first catalyst layer 83 or each second catalyst layer 84 is prepared preferably on the basis of a result of this nondefective inspection. Then, in the gasket applicator 100, the controller 4 may refer to this management data to perform the first half-cut process at the first half-cut part 13 only on a region including the first or second catalyst layer 83 or 84 determined to be "nondefective." This makes it possible to reduce the formation of an unnecessary cut portion 8C in the electrode layer base material 8 to allow the gasket applicator 100 to manufacture the first base material B1 efficiently. This further reduces the occurrence of bonding of the first catalyst layer 83 not to be adopted to the first subgasket base material 9a, thereby suppressing wasteful consumption of the first subgasket base material 9a.

The nondefective inspection on the first or second catalyst layer 83 or 84 may be conducted at the gasket applicator 100. In this case, a camera for capturing an image of the first or second catalyst layer 83 or 84 may be provided at a position between the first supply roller 111 and the first half-cut part 13. Then, the controller 4 may conduct nondefective inspection on the first or second catalyst layer 83 or 84 for by applying an inspection technique such as pattern matching to an image acquired by the camera.

### <Flow of first half-cut process>

The first half-cut process performed in the gasket applicator 100 will be described. First, the electrode layer base material transport mechanism 11 transports the adopted region A81 including the first catalyst layer 83 determined to be nondefective at the electrode layer base material 8 to a fixed position on the suction stage 130. Then, the controller 4 controls the electrode layer base material transport mechanism 11 to stop movement of the electrode layer base material 8 in the transport direction DR1 (in the +X direction). Whether the adopted region A81 has reached the fixed position may be determined by causing a photosensor arranged at a predetermined position on the transport path 8TR to detect the passage of the intended first catalyst layer 83.

After the movement of the electrode layer base material 8 is stopped, the controller 4 starts suction of atmosphere through the suction hole 502 in the suction stage 130. By doing so, the electrode layer base material 8 is sucked on the suction surface 13S through the suction groove 501.

Next, the imaging part 137 captures an image of the first catalyst layer 83, and the position determination part 410 determines the position of the first catalyst layer 83 in the captured image. Then, the controller 4 sets the cutting target line 8T on the basis of the determined position of the first catalyst layer 83.

Next, the controller 4 moves the rotary die cutter 131 from the separated position L11 (see Fig. 11) to the half-cut position L12 (see Fig. 12). The half-cut position L12 is the position of the rotary die cutter 131 for forming the cut portion 8C in the electrode layer base material 8 using the pinnacle blade 51 of the rotary die cutter 131. As described above, the location of the cutting target line 8T differs in response to the position of the first catalyst layer 83 (or second catalyst layer 84) determined by the position determination part 410. For this reason, the half-cut position L12 of the rotary die cutter 131 can change in response to the position of the first catalyst layer 83.

Before the rotary die cutter 131 moves to the half-cut position L12, the controller 4 controls the rotary driver part 132. As a result of this control, the rotary die cutter 131 continues to rotate until the pinnacle blade 51 of the rotary die cutter 131 is placed at an initial position.

As shown in Fig. 12, for example, the initial position of the pinnacle blade 51 may be a position where a blade portion (here, the width direction portion 512) of the pinnacle blade 51 to abut on a most upstream portion 8T1 of the cutting target line 8T (see Fig. 16) comes to the bottom of the rotary die cutter 131. In this case, by moving down the rotary die cutter 131 toward the -Z side and placing the rotary die cutter 131 at the half-cut position L12, the cut portion 8C can be formed at the most upstream portion 8T1 of the electrode layer base material 8 with the pinnacle blade 51.

When the rotary die cutter 131 comes to the half-cut position L12, the outer peripheral surface of the rotary die cutter 131 comes into contact with the upper surface of the electrode layer base material 8 (the first catalyst layer 83 or the electrolyte membrane 82) sucked on the suction stage 130. Preferably, during this contact, the outer peripheral surface of the rotary die cutter 131 and the suction surface 13S of the suction stage 130 are pressed against each other with the intervention of the electrode layer base material 8 therebetween. In this state, the controller 4 causes the rotary driver part 132 and the movement drive part 133 to rotate the rotary die cutter 131 synchronously with the movement of the rotary die cutter 131 toward the upstream side (-Y side) of the rotary die cutter 131. Then, the pinnacle blade 51 is rotated by a fixed angle from the initial position to an end position to form the cut portion 8C in the electrode layer base material 8 along the cutting target line 8T.

The rotary die cutter 131 may be driven to rotate by frictional resistance generated between the electrode layer base material 8 and the rotary die cutter 131. In this case, after moving the pinnacle blade 51 to the initial position, the controller 4 may control the clutch 522 to cut the connection between the drive shaft and the driven shaft of the rotary shaft 51A. As described above, the clutch 522 may be rotated if the rotary die cutter 131 is to rotate actively at the half-cut position L12.

When the pinnacle blade 51 rotates to the end position, the controller 4 moves up the rotary die cutter 131 toward the +Z side and moves the rotary die cutter 131 to the separated position L11. Next, the controller 4 releases the electrode layer base material 8 from the suction by the suction stage 130. Then, the controller 4 causes the electrode layer base material transport mechanism 11 to move the electrode layer base material 8 again in the transport direction DR1.

At the first half-cut part 13, the position of the rotary die cutter 131 is movable relative to the suction stage 130. This allows the blade of the rotary die cutter 131 to move relative to the electrode layer base material 8 sucked on the suction stage 130. In this way, the cut portion 8C can be formed at an appropriate position of the electrode layer base material 8.

In particular, in the first preferred embodiment, the rotary die cutter 131 is movable in the X direction (transport direction DR1) and in the Y direction (width direction DR2). This allows adjustment of a position where the cut portion 8C is to be formed in a direction parallel to the surface of the electrode layer base material 8. In the first preferred embodiment, the rotary die cutter 131 is movable in the Z direction (the thickness direction of the electrode layer base material 8). This allows adjustment of the depth of the cut portion 8C to be formed in the electrode layer base material 8.

The first half-cut part 13 cuts the electrolyte membrane 82 while leaving the backsheet 81 unremoved at the electrode layer base material 8. Thus, during bonding to the first subgasket base material 9a at the first bonding mechanism 15, the MEA 85 formed by the first half-cut process by the first half-cut part 13 can be left on the backsheet 81.

At the first half-cut part 13, the rotary shaft 51A is arranged in the width direction DR2 orthogonal to the longitudinal direction of the electrode layer base material 8. In this arrangement, moving the rotary die cutter 131 in the longitudinal direction of the electrode layer base material 8 while rotating the rotary die cutter 131 about the rotary shaft 51A allows efficient formation of the cut portion 8C in the electrode layer base material 8.

At the first half-cut part 13, the cutting target line 8T is decided on the basis of the position of the first catalyst layer 83 determined by the position determination part 410, and the half-cut position L12 of the rotary die cutter 131 is set to conform to the decided cutting target line 8T. This allows formation of the cut portion 8C precisely to conform to the position of the first catalyst layer 83.

In the gasket applicator 100, the electrode layer base material transport mechanism 11 transports the electrode layer base material 8 in the transport direction DR1 while moving and stopping the electrode layer base material 8 alternately on the suction stage 130. Then, while the gasket applicator 100 stops the electrode layer base material 8, the movement drive part 133 moves the rotary die cutter 131 to the half-cut position L12. This provides increased positional accuracy of the cut portion 8C formed in the electrode layer base material 8.

### <Configuration of first bonding mechanism 15>

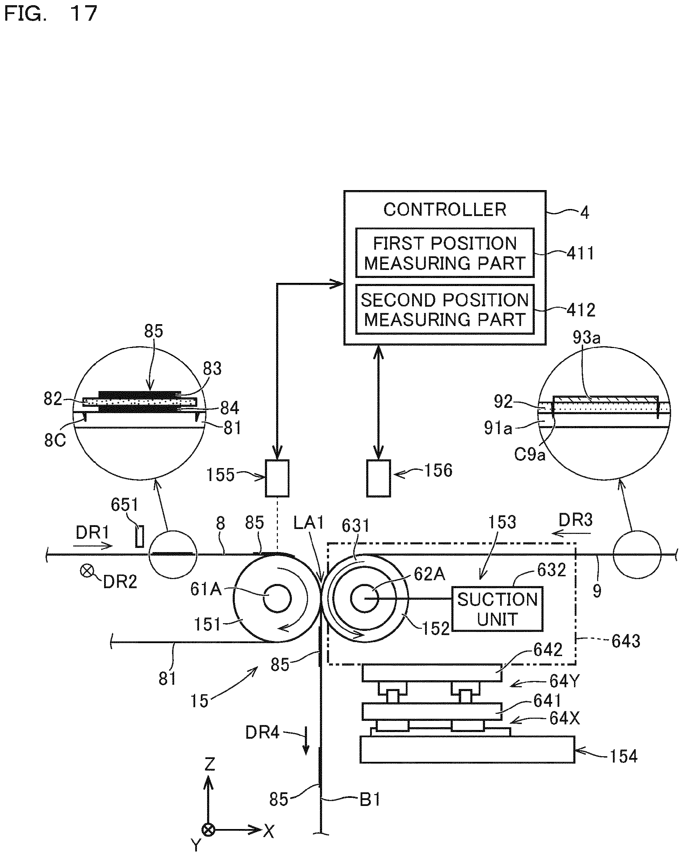

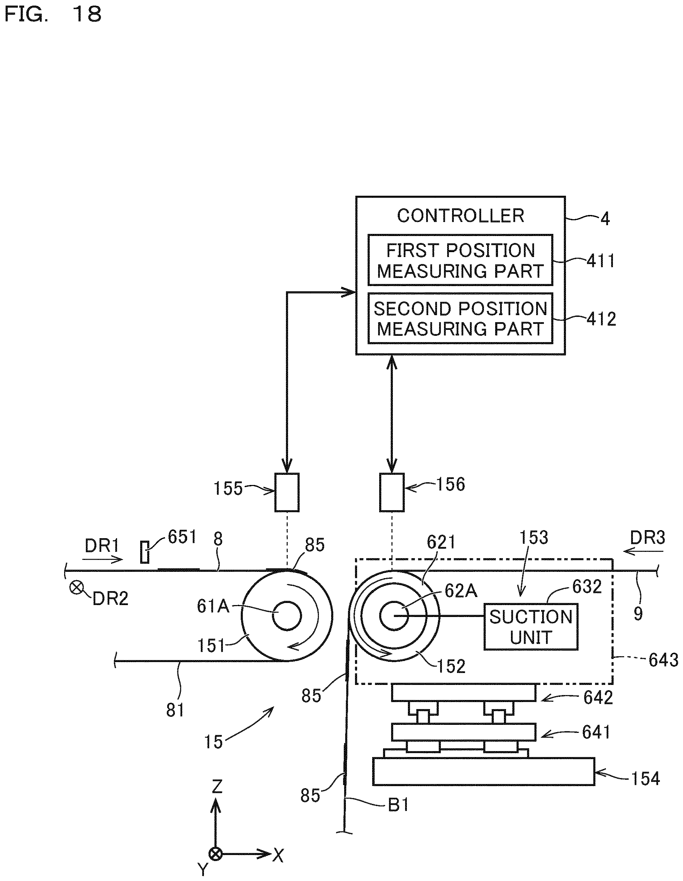

The configuration of the first bonding mechanism 15 will be described by referring to Figs. 17 and 18. Figs. 17 and 18 are side views each schematically showing the first bonding mechanism 15. For the convenience of description, arrows indicating an X direction, a Y direction, and a Z direction orthogonal to each other are given in Figs. 17 and 18. The +X direction agrees with the transport direction DR1, and the -X agrees with the transport direction DR3. The Y direction is parallel to the width direction DR2.

As described by referring to Fig. 8, the first bonding mechanism 15 is a device for bonding between the electrode layer base material 8 from which the non-adopted region A82 of the electrolyte membrane 82 is separated and the first subgasket base material 9a from which the non-corresponding region A92 of the first cover film 93a is separated. The first bonding mechanism 15 performs a positioning process described later to align the position of the first catalyst layer 83 and that of the first cut portion C9a (corresponding region A91) with each other. In this state, the first bonding mechanism 15 bonds the electrode layer base material 8 and the first subgasket base material 9a to each other. The first bonding mechanism 15 includes a first bonding roller 151, a second bonding roller 152, a suction mechanism 153, a bonding roller movement drive part 154, a first imaging part 155, and a second imaging part 156.

The first bonding roller 151 is a cylindrical member having an outer peripheral surface on which the electrode layer base material 8 is to be held. The first bonding roller 151 rotates about a rotary shaft 61A extending in the width direction DR2. The first bonding roller 151 holds the electrode layer base material 8 from the backsheet 81. The outer peripheral surface of the first bonding roller 151 may be made of rubber, for example.

The second bonding roller 152 is a cylindrical member having an outer peripheral surface on which the first subgasket base material 9a is to be held. The second bonding roller 152 rotates about a rotary shaft 62A extending in the width direction DR2. The second bonding roller 152 holds the first subgasket base material 9a from first backsheet 91a. The first and second bonding rollers 151 and 152 may be driven rollers to be rotated passively by frictional resistances applied from the electrode layer base material 8 and the first subgasket base material 9a respectively. The first and second bonding rollers 151 and 152 may rotate actively. Namely, the first and second bonding rollers 151 and 152 may be rotated by connecting a servo motor not shown in the drawings to the rotary shafts 61A and 62A, and causing the controller 4 to control this servo motor.

The second bonding roller 152 is arranged parallel to the first bonding roller 151. The suction mechanism 153 is to suck the first subgasket base material 9a as a target of holding by the second bonding roller 152 on the outer peripheral surface of the second bonding roller 152.

The suction mechanism 153 includes a porous member 631 formed on the outer peripheral surface of the second bonding roller 152, and a suction unit 632 connected to the porous member 631. The porous member 631 has many tiny holes and is made of a porous material such as porous carbon or porous ceramic, for example. The porous ceramic is a sintered compact of aluminum (Al₂O₃) or silicon carbide (SiC), for example. The porous member 631 has a pore diameter of equal to or less than 5 µm, for example, and porosity of from 15 to 50%, for example.

The porous member 631 may be replaced with a metallic member that may be stainless steel such as SUS or iron. In this case, the outer surface of the metallic member is preferably given tiny suction holes by machining. To reduce the occurrence of a suction mark, the diameters of the suction holes are set at equal to or less than 2 mm, for example.

The suction unit 632 is configured using a vacuum pump, for example, and is coupled to the porous member 631 via a suction pipe. As the suction unit 632 is driven, atmosphere in the vicinity of the outer surface of the porous member 631 is sucked into the many holes. By doing so, the first subgasket base material 9a is sucked on the outer peripheral surface of the second bonding roller 152 (the outer surface of the porous member 631). Here, the second bonding roller 152 holds the first subgasket base material 9a under suction from the first backsheet 91a. In this way, in the first preferred embodiment, the second bonding roller 152 is configured as a suction roller.

The bonding roller movement drive part 154 moves the second bonding roller 152. The bonding roller movement drive part 154 includes an approaching/separating direction drive part 64X and an axis direction drive part 64Y. As shown in Figs. 17 and 18, the approaching/separating direction drive part 64X moves the second bonding roller 152 in a direction of moving closer to the first bonding roller 151 (-X direction) and in a direction of moving farther from the first bonding roller 151 (+X direction).

The approaching/separating direction drive part 64X includes an X axis table 641, a linear drive mechanism (a linear motor mechanism or a ball screw mechanism, for example) for moving the X axis table 641 in the X direction, a guide part for guiding the X axis table in the X direction, etc. The linear drive mechanism of the approaching/separating direction drive part 64X is electrically connected to the controller 4 and operates in response to a control signal from the controller 4.

The axis direction drive part 64Y moves the second bonding roller 152 in the Y direction parallel to the width direction DR2 (axis direction) in which the rotary shaft 62A of the second bonding roller 152 extends. The axis direction drive part 64Y includes a Y axis table 642 and a linear drive mechanism (a linear motor mechanism or a ball screw mechanism, for example) for moving the Y axis table 642 in the Y direction, and additionally includes a guide part for guiding the Y axis table in the Y direction, etc. The linear drive mechanism of the axis direction drive part 64Y is electrically connected to the controller 4 and operates in response to a control signal from the controller 4. The axis direction drive part 64Y is placed on the X axis table 641 and moves in the X direction together with the X axis table 641.

The rotary shaft 62A of the second bonding roller 152 is coupled to the Y axis table 642 of the axis direction drive part 64Y via a coupling member 643. Thus, as the Y axis table 642 moves in the Y direction, the second bonding roller 152 moves in the Y direction. Further, as the X axis table 641 moves in the X direction, the second bonding roller 152 moves in the width direction DR2.

The first imaging part 155 is arranged to face a surface of the electrode layer base material 8 on the +Z side (a surface at the first catalyst layer 83) held on the first bonding roller 151. The second imaging part 156 is arranged to face a surface of the first subgasket base material 9a on the +Z side (the first cover film 93a-side surface) held on the second bonding roller 152. The first and second imaging parts 155 and 156 is each configured using one, or two or more cameras with image sensors. The first and second imaging parts 155 and 156 are electrically connected to the controller 4, and transmit image signals detected by the image sensors to the controller 4.

The first imaging part 155 captures an image of the surface of the electrode layer base material 8 on the +Z side (namely, the first catalyst layer 83-side surface) held on the first bonding roller 151. The second imaging part 156 captures an image of the surface of the first subgasket base material 9a on the +Z side (namely, a first cover film 93a-side surface) held on the second bonding roller 152.

The first bonding mechanism 15 includes a photosensor 651 arranged upstream of the first imaging part 155 in the transport direction DR1. The photosensor 651 is a reflective type sensor, for example, and detects light reflected on the first catalyst layer 83 of the electrode layer base material 8. The photosensor 651 may be a transmission sensor, for example. The photosensor 651 is electrically connected to the controller 4, and outputs a detection signal. On the basis of the detection signal from the photosensor 651, the controller 4 determines that the first catalyst layer 83 has reached a point of measurement by the photosensor 651. The controller 4 can measure the length of the first catalyst layer 83 in the X direction (transport direction DR1) on the basis of a distance the electrode layer base material 8 has traveled from the start of detection of the first catalyst layer 83 to the end of the detection by the photosensor 651.

As shown in Fig. 17, the controller 4 functions as a first position measuring part 411 and a second position measuring part 412. The first and second position measuring parts 411 and 412 are functions realized as software by causing the processor 41 to execute the computer program P. The first and second position measuring parts 411 and 412 may be hardware configurations such as application-specific integrated circuits.

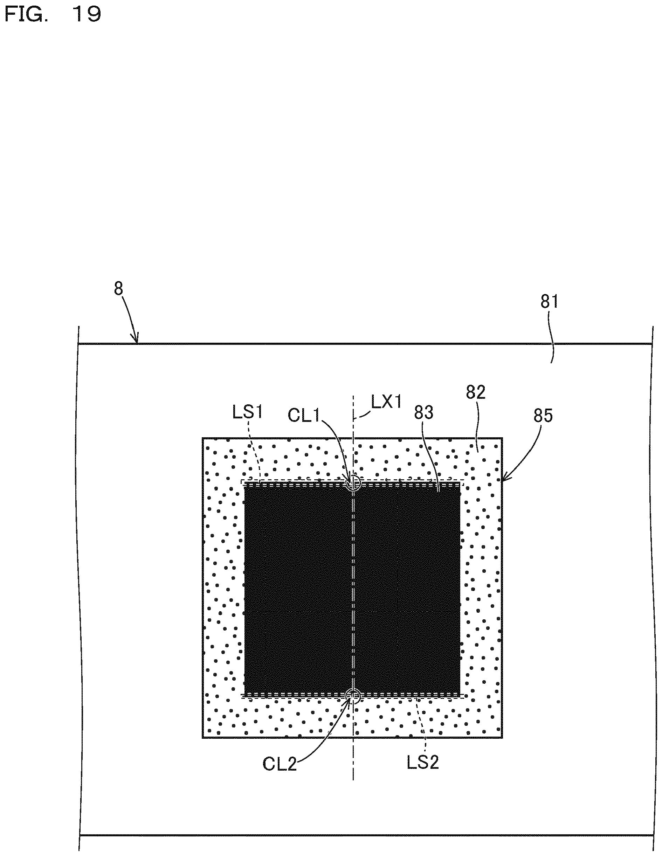

Fig. 19 is a plan view schematically showing the MEA 85 on the electrode layer base material 8. The first position measuring part 411 determines the position of the electrode layer base material 8 on the basis of an image acquired by the first imaging part 155. More specifically, the first position measuring part 411 determines the position of the first catalyst layer 83 (a position in the transport direction DR1 and a position in the width direction DR2) in the image acquired by the first imaging part 155. As shown in Fig. 19, for example, the first position measuring part 411 measures the position of a crossing CL1 and the position of a crossing CL2 of a center line LX1 of the first catalyst layer 83 in the transport direction DR1 with a side LS1 and a side LS2 respectively of the first catalyst layer 83 parallel to the X direction. The position of the center line LX1 may be determined on the basis of the length of the first catalyst layer 83 in the X direction, for example. The sides LS1 and LS2 are preferably detected by performing publicly-known image processing such as binarization or edge extraction on the image captured by the first imaging part 155, for example. The first position measuring part 411 may determine the center of the positions of the crossings CL1 and CL2 as the position of the first catalyst layer 83.

The first position measuring part 411 may detect the four corners 831 to 834 (see Fig. 16) or the four sides of the first catalyst layer 83, and determine the position of the first catalyst layer 83 on the basis of the positions of the detected portions.

The second position measuring part 412 determines the position of the first subgasket base material 9a on the basis of an image acquired by the second imaging part 156. More specifically, the second position measuring part 412 detects the first cut portion C9a formed in the first subgasket base material 9a in the image acquired by the second imaging part 156. Then, on the basis of the position of the first cut portion C9a in the image, the second position measuring part 412 determines the position of the first cut portion C9a (a position in the transport direction DR1 and a position in the width direction DR2).

As shown in Fig. 18, while bonding is not performed between the first and second bonding rollers 151 and 152, the first and second bonding rollers 151 and 152 are separated from each other in the X direction. In this state, the position of the electrode layer base material 8 and the position of the first subgasket base material 9a are aligned with each other. As shown in Fig. 17, for implementation of bonding between the first and second bonding rollers 151 and 152, the first and second bonding rollers 151 and 152 are moved closer to each other. At a bonding position LA1 where the first and second bonding rollers 151 and 152 are at positions closest to each other, the electrode layer base material 8 and the first subgasket base material 9a are bonded to each other to form a bonded body. In the subgasket applicator 100, immediately after the bonded body is formed at the bonding position LA1, the backsheet 81 is detached from the electrode layer base material 8. By doing so, the first base material B1 is obtained including the membrane electrode assemblies 85 at regular intervals (see Fig. 9). The first base material B 1 is an example of a membrane electrode base material including the membrane electrode assemblies 85. Each roller used for transporting the first base material B1 from the first bonding mechanism 15 to the base material assembly collection roller 5 while supporting the first base material B1 is an example of a membrane electrode base material transport mechanism of transporting the first base material B1 along a defined transport path.

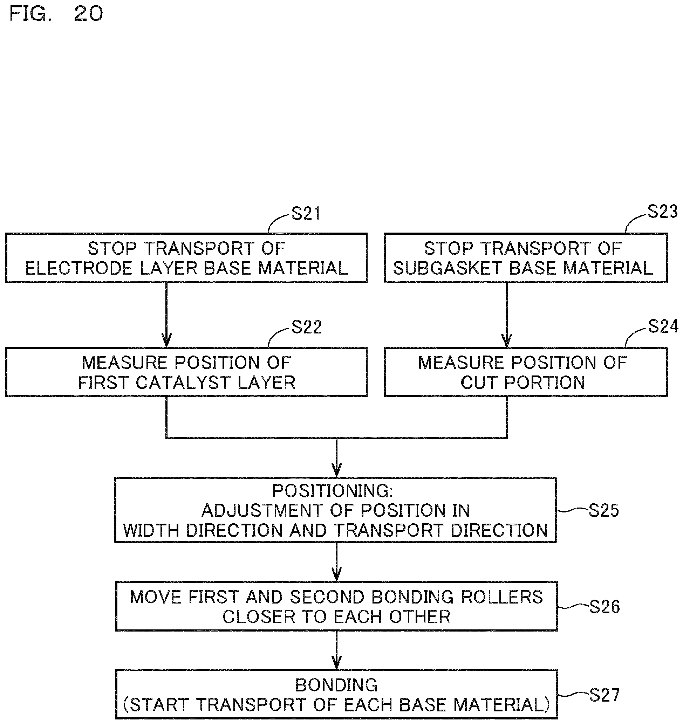

Fig. 20 shows a flow of the bonding process performed by the first bonding mechanism 15. First, the electrode layer base material transport mechanism 11 transports the electrode layer base material 8 in the +X direction. By doing so, the first catalyst layer 83 as a bonding target (namely, the adopted region A81) is detected by the photosensor 651. The controller 4 stores start time of the detection into the memory 42. The controller 4 may store a movement amount of the electrode layer base material 8 as the length of the electrode layer base material 8 in the X direction by which the electrode layer base material 8 has moved from the start time of the detection to finish time of the detection when detection of the first catalyst layer 83 is finished.

When the first catalyst layer 83 reaches a position of imaging by the first imaging part 155, the controller 4 stops transport of the electrode layer base material 8 by the electrode layer base material transport mechanism 11 (step S21). Then, the first position measuring part 411 of the controller 4 determines the position of the first catalyst layer 83 on the basis of an image acquired by the first imaging part 155 (step S22).

When the first cut portion C9a reaches a position of imaging by the second imaging part 156, the controller 4 stops transport of the first subgasket base material 9a by the first subgasket base material transport mechanism 12 (step S23). Then, the second position measuring part 412 of the controller 4 determines the position of the first cut portion C9a (corresponding region A91) on the basis of an image acquired by the second imaging part 156 (step S24). The controller 4 performs the processes in step S23 and step S24 in parallel with the processes in step S21 and step S22.

Next, the controller 4 performs the positioning process (step S25). Specifically, to compensate for positional deviation between the first catalyst layer 83 and the first cut portion C9a in the width direction DR2 (axis direction), the controller 4 controls the axis direction drive part 64Y to move the second bonding roller 152 in the width direction DR2 (axis direction).

To compensate for positional deviation between the first catalyst layer 83 and the first cut portion C9a in each of the transport directions DR1 and DR3, the controller 4 controls the electrode layer base material transport mechanism 11 or the first subgasket base material transport mechanism 12. As a result of this control, one of the electrode layer base material 8 and the first subgasket base material 9a is transported. By doing so, the position of the first catalyst layer 83 and the position of the first cut portion C9a are aligned with each other at the bonding position LA1 (contact position) in the first bonding mechanism 15.

When the positioning process in step S25 is finished, the controller 4 moves the second bonding roller 152 closer to the first bonding roller 151 (step S26). By doing so, the electrode layer base material 8 and the first subgasket base material 9a are brought into contact with each other at the bonding position LA1 between the first and second bonding rollers 151 and 152.

Next, the controller 4 restarts to transport the electrode layer base material 8 and the first subgasket base material 9a using the electrode layer base material transport mechanism 11 and the first subgasket base material transport mechanism 12. As a result, bonding between the electrode layer base material 8 and the first subgasket base material 9a is started at the first bonding mechanism 15. As a result of the positioning process in step S25, this bonding proceeds while the first catalyst layer 83 (adopted region A81) and the first cut portion C9a (corresponding region A91) are aligned with each other.

In the gasket applicator 100 of the first preferred embodiment, the first subgasket base material 9a can be held fixedly under suction by the second bonding roller 152 moving in the width direction DR2 (axis direction). This makes it possible to reduce the occurrence of positional deviation of the first subgasket base material 9a on the second bonding roller 152 to be caused when the second bonding roller 152 is moved in the width direction DR2. As a result, it becomes possible to align the position of the electrode layer base material 8 and the position of the first subgasket base material 9a with each other with higher precision in the width direction DR2, thereby allowing the first subgasket base material 9a to be applied favorably to the electrode layer base material 8.

The second bonding roller 152 for holding the first subgasket base material 9a under suction is moved in the approaching/separating direction relative to the first bonding roller 151. This makes it possible to reduce the occurrence of positional deviation of the first subgasket base material 9a on the second bonding roller 152 to be caused when the second bonding roller 152 is moved in the approaching/separating direction.

In the first preferred embodiment, the suction mechanism 153 is provided for the second bonding roller 152 to hold the first subgasket base material 9a. However, this is not an absolute necessity. Specifically, the porous member 631 may be formed on the outer peripheral surface of the first bonding roller 151 to hold the electrode layer base material 8, and the electrode layer base material 8 may be held under suction on the first bonding roller 151. In another case, the bonding roller movement drive part 154 may be coupled to the first bonding roller 151 to move the first bonding roller 151 in the axis direction (width direction DR2) and in the approaching/separating direction (X direction.

### <Second base material preparation unit 2>

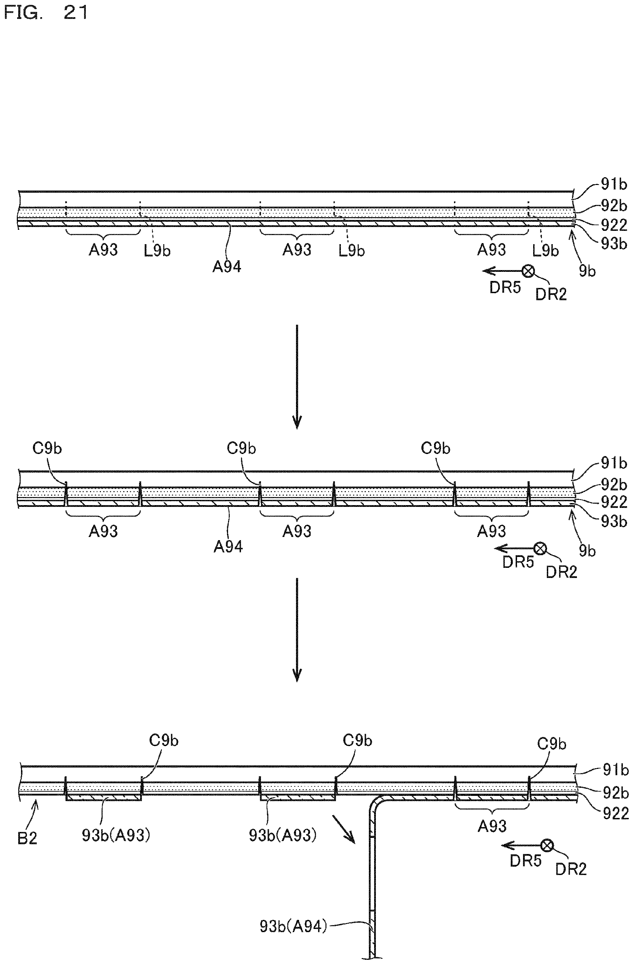

As shown in Fig. 2, the second base material preparation unit 2 includes the second subgasket base material transport mechanism 21, the third half-cut part 22, and a second cover film collection roller 24. Fig. 21 is a longitudinal sectional view schematically showing the second subgasket base material 9b processed by the second base material preparation unit 2. The second base material preparation unit 2 prepares the second base material B2 by processing the second subgasket base material 9b.

### <Second subgasket base material transport mechanism 21>

The second subgasket base material transport mechanism 21 transports the elongated strip-shaped second subgasket base material 9b toward the second bonding mechanism 3 along a fixed transport path 9Tb while supporting the second subgasket base material 9b with a plurality of rollers. In the first preferred embodiment, a movement direction in which the second subgasket base material 9b is moved by the second subgasket base material transport mechanism 21 toward the second bonding mechanism 3 will be called a transport direction DR5. A side along the transport path 9Tb closer to a third supply roller 211 is defined as an upstream side of the transport direction DR5, and a side along the transport path 9Tb closer to the second bonding mechanism 3 is defined as a downstream side of the transport direction DR5. The transport direction DR5 agrees with the longitudinal direction of the second subgasket base material 9b. A direction parallel to a main surface of the second subgasket base material 9b and orthogonal to the transport direction DR5 agrees with the width direction DR2.

As shown in the upper view of Fig. 21, the second subgasket base material 9b has a configuration substantially the same as that of the first subgasket base material 9a. Specifically, the second subgasket base material 9b includes, in sequence from one side to an opposite side, a second backsheet 91b, a second subgasket film 92b, and a second cover film 93b. The second backsheet 91b, the second subgasket film 92b, and the second cover film 93b each have an elongated strip shape. Like the first subgasket base material 9a, the second subgasket base material 9b is manufactured in advance by an external device not shown in the drawings, and is prepared in a state of being wound in a roll shape on the third supply roller 211.

An adhesive layer (not shown in the drawings) containing an adhesive is interposed between the second backsheet 91b and the second subgasket film 92b. As shown in the upper view of Fig. 21, an adhesive layer 922 containing an adhesive is formed on a main surface of the second subgasket film 92b adjacent to the second cover film 93b. The second cover film 93b is adhesively bonded by the adhesive layer 922 under adhesive force of a degree allowing the second cover film 93b to be detached easily from the second subgasket film 92b. Preferably, the adhesive in the adhesive layer 922 is a pressure-sensitive adhesive, a thermosetting adhesive, a thermoplastic adhesive, or a UV-curable adhesive.

As shown in Fig. 2, the second subgasket base material transport mechanism 21 includes the third supply roller 211, a second feed roller 212, and a third dancer roller 213. The second subgasket base material 9b is supplied in a state of being wound on the third supply roller 211. The second feed roller 212 pulls out the second subgasket base material 9b from the third supply roller 211. In response to a control signal from the controller 4, the second feed roller 212 rotates actively. When the rotation of the second feed roller 212 is stopped, sending of the second subgasket base material 9b from the third supply roller 211 is stopped.

In order to apply constant tension on the second subgasket base material 9b, the third dancer roller 213 moves up and down (in a direction orthogonal to a main surface of the second subgasket base material 9b) in response to tension on the second subgasket base material 9b. By the movement of the third dancer roller 213, abrupt variation in the tension on the second subgasket base material 9b is absorbed.

### <Third half-cut part 22>

The third half-cut part 22 is provided downstream from the third dancer roller 213. The third half-cut part 22 performs a process of cutting the second cover film 93b and the second subgasket film 92b of the second subgasket base material 9b into a corresponding region A93 and a non-corresponding region A94 (third half-cut process).

As shown in the middle view of Fig. 21, the third half-cut process is to form a second cut portion C9b in the second subgasket base material 9b. The second cut portion C9b is formed along a boundary line (cutting position P9b) between the rectangular corresponding region A93 and the non-corresponding region A94 other than the corresponding region A93. The corresponding region A93 has a similar shape and has a substantially equal size to the second catalyst layer 84, for example. The corresponding region A93 may be dissimilar in shape to the second catalyst layer 84. The corresponding region A93 may be larger than the second catalyst layer 84.

The second cut portion C9b is defined by a cutting plane of the second cover film 93b and the second subgasket film 92b. The second cut portion C9b does not penetrate the second backsheet 91b and is defined by a cutting plane extending from the upper surface (a second subgasket film 92b-side surface) to an intermediate portion of the second backsheet 91b in the thickness direction. Namely, the second cut portion C9b does not reach the lower surface of the second backsheet 91b.

As shown in Fig. 2, the third half-cut part 22 includes a rotary die cutter 221, a support roller 222, a drive part 223, and an imaging part 224. The support roller 222 supports the second subgasket base material 9b from a second backsheet 91b-side. The rotary die cutter 221 is arranged a second cover film 93b-side of the second subgasket base material 9b. A pinnacle blade having a shape corresponding to the corresponding region A93 is provided on the outer peripheral surface of the rotary die cutter 221. A rotary driver part (drive part 223) is connected to the rotary shaft of the rotary die cutter 221. While the rotary die cutter 221 rotates, the tip of the pinnacle blade is inserted into a portion of the second subgasket base material 9b supported on the rotary die cutter 221. By doing so, the second cut portion C9b is formed in the second subgasket base material 9b.

The drive part 223 includes a rotary driver part and a movement drive part. The rotary driver part rotates the rotary die cutter 221 about the rotary shaft extending in the width direction DR2. The movement drive part moves the rotary die cutter 221 in a direction vertical to the main surface of the second subgasket base material 9b and in the width direction DR2. For example, the drive part 223 may have a configuration comparable to the Y direction drive section 135 and the Z direction drive section 136 (see Figs. 11 and 14). The drive part 223 is electrically connected to the controller 4, and moves the rotary die cutter 221 in response to a control signal from the controller 4.

### <Imaging part 224>

The imaging part 224 captures an image of the second catalyst layer 84 of the first base material B1 produced by the first bonding mechanism 15. Like the imaging part 137 for capturing an image of the first catalyst layer 83, the imaging part 224 includes one, or two or more cameras. The imaging part 224 is electrically connected to the controller 4, and transmits an image signal resulting from imaging to the controller 4.

### <Second cover film collection roller 24>

As shown in the bottom view of Fig. 21, the second cover film collection roller 24 detaches the non-corresponding region A94 of the second cover film 93b from the second subgasket base material 9b provided with the second cut portion C9b, and winds the detached non-corresponding region A94. The second cover film collection roller 24 is an example of a first removal mechanism that removes the non-corresponding region A94 of the second cover film 93b. As a result of the detachment process by the second cover film collection roller 24, the second base material B2 is obtained in which the corresponding region A93 of the second cover film 93b is left on the upper surface of the second subgasket film 92b. Specifically, , the second base material B2 includes, in sequence from one side to an opposite side, the second backsheet 91b, the second subgasket film 92b, and a plurality of the corresponding regions A93 of the second cover film 93b. These corresponding regions A93 of the second cover film 93b are arranged at an interval in the longitudinal direction of the second base material B2.

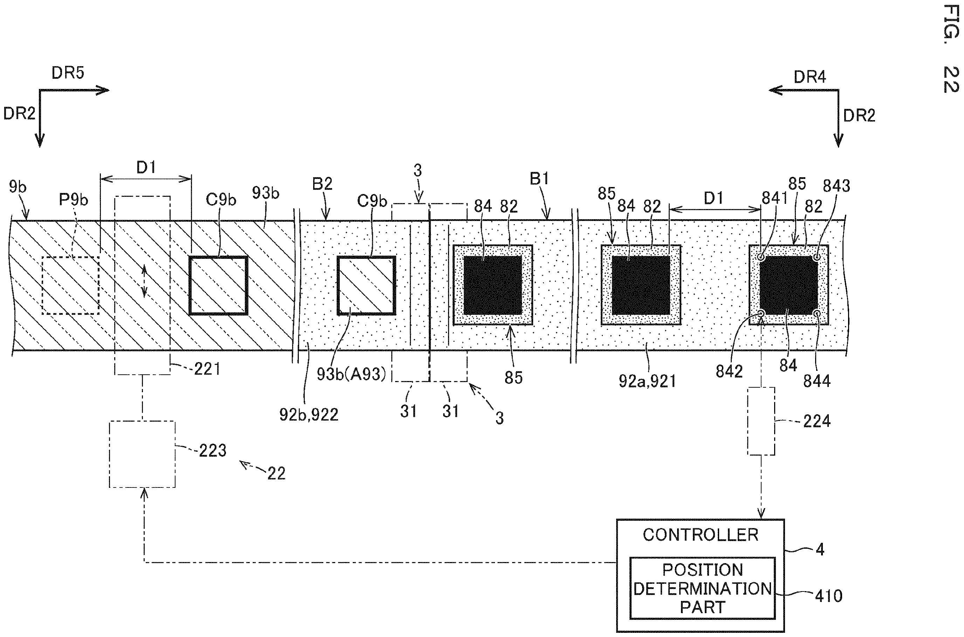

As will be described later, for bonding between the first base material B1 and the second base material B2 at the second bonding mechanism 3, the position of the corresponding region A93 of the second cover film 93b is aligned with the position of the second catalyst layer 84 of the first base material B 1. In the gasket applicator 100, to perform this alignment precisely, the position of the second catalyst layer 84 is determined using an image obtained by the imaging part 224. Then, the third half-cut part 22 forms the second cut portion C9b at the second subgasket base material 9b to conform to the determined position of the second catalyst layer 84. This process will be described by referring to Fig. 22.

Fig. 22 is a plan view conceptually showing how the third half-cut part 22 forms the second cut portion C9b in the second subgasket base material 9b. As shown in Fig. 22, the first base material B1 is transported in the transport direction DR4 toward the second bonding mechanism 3 (more specifically, toward a bonding roller 31). As shown in Fig. 1, transport of the first base material B 1 toward the second bonding mechanism 3 is realized by the first subgasket base material transport mechanism 12 that transports the first subgasket base material 9a, each roller supporting the first base material B1, and winding of the base material assembly B3 by the base material assembly collection roller 5. As shown in Figs. 1 and 2, transport of the second base material B2 in the transport direction DR5 toward the second bonding mechanism 3 is realized by transport of the second subgasket base material 9b by the second subgasket base material transport mechanism 21 and winding of the base material assembly B3 by the base material assembly collection roller 5.

The first base material B 1 includes a plurality of the second catalyst layers 84 arranged at an interval in the longitudinal direction of the first base material B 1 (transport direction DR4). Thus, as the first base material B1 is transported in the transport direction DR4, the second catalyst layers 84 pass through an imaging region of the imaging part 224 sequentially.

The position determination part 410 (see Fig. 13) determines the position of each of the second catalyst layers 84 on the basis of an image acquired by the imaging part 224. More specifically, the position determination part 410 determines the position of the second catalyst layer 84 in the transport direction DR4 and determines the position of this second catalyst layer 84 in the width direction DR2. The position determination part 410 may determine the position of the second catalyst layer 84 by determining the position of each side on the periphery of the second catalyst layer 84 or by determining the positions of four corners 841 to 844 using the image.

To determine the position of the second catalyst layer 84 in the transport direction DR4, the position determination part 410 may calculate a distance D1 between two second catalyst layers 84 adjacent to each other in the transport direction DR4, for example. The distance D1 may be calculated from the position of a downstream end of one of the two adjacent second catalyst layers 84 closer to the upstream side and the position of an upstream end of the other one of the two second catalyst layers 84 closer to the downstream side. Calculating the distance D1 allows determination of the position of each of the second catalyst layers 84 in the transport direction DR4.

To determine the position of the second catalyst layer 84 in the width direction DR2, the position determination part 410 may determine the positions of opposite ends (corners 841 and 842, for example) of the second catalyst layer 84 as a target of the position determination in the width direction DR2 using the image. Then, the center of the determined opposite ends may be defined as the position of the second catalyst layer 84 as a target in the width direction DR2.

The third half-cut part 22 may include a photosensor for detecting the second catalyst layer 84. In this case, the position determination part 410 may determine the position of the second catalyst layer 84 on the basis of an output signal from the photosensor.

The controller 4 decides a cutting position P9b on the basis of the position of the second catalyst layer 84 determined by the position determination part 410 (see Figs. 21 and 22). The cutting position P9b is a position where the second cut portion C9b corresponding to the second catalyst layer 84 is to be formed. The controller 4 aligns the position of the cutting position P9b in the width direction DR2 with the position of the corresponding second catalyst layer 84 in the width direction DR2. Further, the controller 4 aligns the position of the cutting position P9b in the transport direction DR5 with the position of the corresponding second catalyst layer 84 in the transport direction DR4.

The controller 4 makes agreement of a distance from the cutting position P9b to the second bonding mechanism 3 in the transport direction DR5 with a distance from the corresponding second catalyst layer 84 to the second bonding mechanism 3 in the transport direction DR4. This allows the corresponding region A93 of the second cover film 93b to be formed at the cutting position P9b and the corresponding second catalyst layer 84 to reach the second bonding mechanism 3 at the same time. If the foregoing distance D1 is calculated as the position of the second catalyst layer 84 in the transport direction DR4, the controller 4 sets the cutting position P9b at a position separated downstream by the distance D1 in the transport direction DR5 from the one previous cutting position P9b, as shown in Fig. 22.

After the cutting position P9b is set at the second subgasket base material 9b, the controller 4 forms the second cut portion C9b at the set cutting position P9b. More specifically, while the controller 4 controls the drive part 223 to separate the rotary die cutter 221 from the second subgasket base material 9b, the controller 4 aligns the position of the blade of the rotary die cutter 221 in the axis direction (width direction DR2) with the cutting position P9b. Then, to bring the blade of the rotary die cutter 221 into contact with the cutting position P9b, the controller 4 moves the rotary die cutter 221 closer to the support roller 222 and rotates the rotary die cutter 221. As a result, the second cut portion C9b is formed at the cutting position P9b of the second subgasket base material 9b moving in the transport direction DR5.

### <Second bonding mechanism 3>

As shown in Fig. 2, the second bonding mechanism 3 includes two bonding rollers 31, 31. One of the two bonding rollers 31, 31 receives the first base material B1 supplied from the first base material preparation unit 1, and the other bonding roller 31 receives the second base material B2 supplied from the second base material preparation unit 2. By inserting the first and second base materials B1 and B2 into between the two bonding rollers 31, 31, the second base material B2 is bonded to the first base material B1. In this way, the base material assembly B3 is obtained.

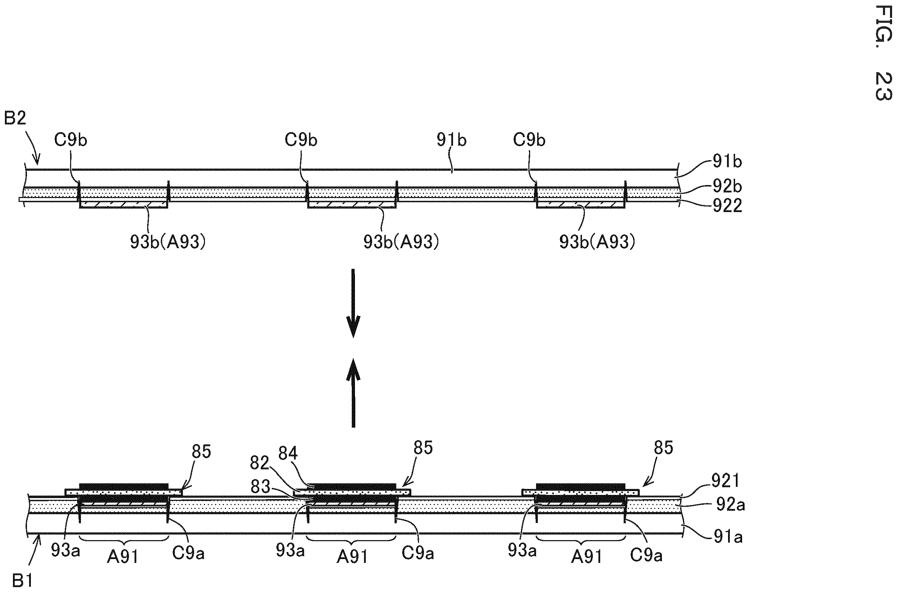

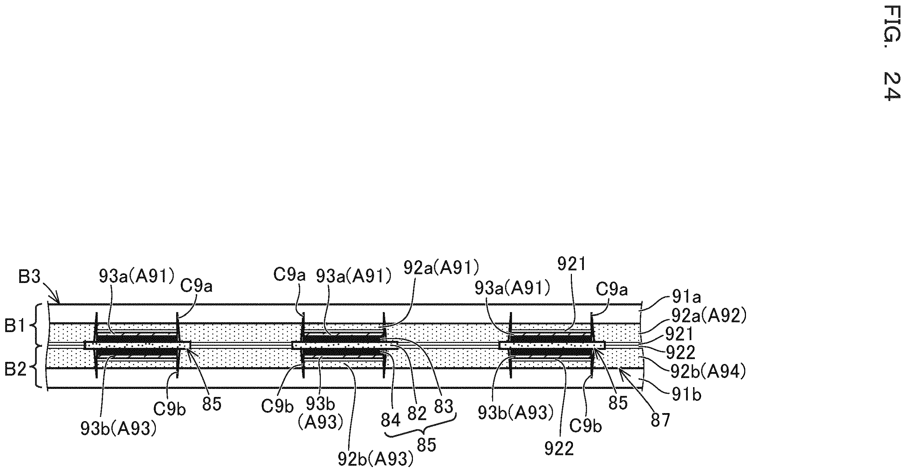

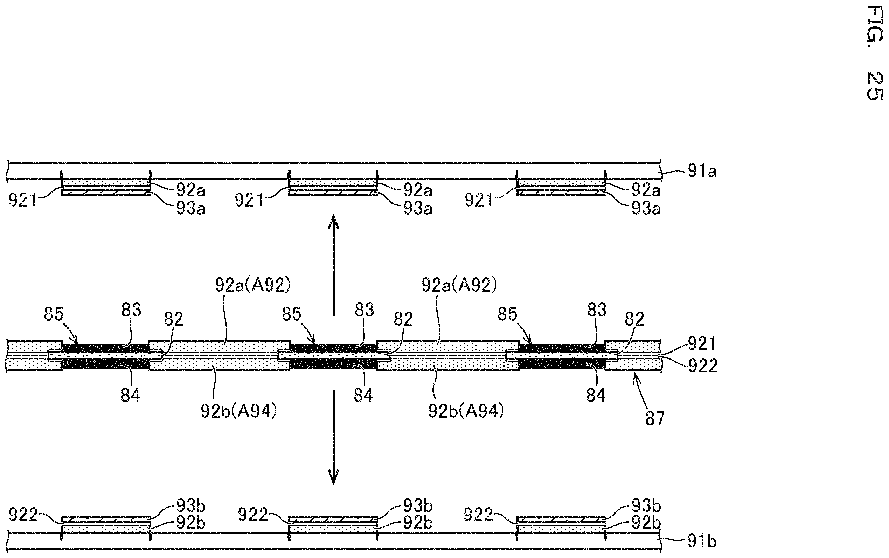

Fig. 23 is a longitudinal sectional view schematically showing the first base material B1 and the second base material B2 to be bonded to each other by the second bonding mechanism 3. Fig. 24 is a longitudinal sectional view schematically showing the base material assembly B3. Fig. 25 is a longitudinal sectional view schematically showing the subgasket added MEA 87 obtained from the base material assembly B3. As shown in Fig. 23, while the position of the second catalyst layer 84 at the first base material B1 and the position of the corresponding region A93 of the second cover film 93b at the second base material B2 are aligned with each other, the second base material B2 is bonded to the first base material B1 at the second bonding mechanism 3. As a result of bonding of the second base material B2 to the first base material B1, the base material assembly B3 shown in Fig 24 is obtained. As shown in Figs. 23 and 24, in the base material assembly B3, a surface of the electrolyte membrane 82 exposed in the periphery of the second catalyst layer 84 at the first base material B1 is adhesively bonded to the adhesive layer 922 on the second subgasket film 92b exposed in the periphery of the second cover film 93b at the second base material B2. An exposed main surface of the first subgasket film 92a (adhesive layer 921) at the first base material B1 is adhesively bonded to the adhesive layer 922 on the second subgasket film 92b at the second base material B2.

An adhesion reinforcing unit 33 is provided between the second bonding mechanism 3 and the base material assembly collection roller 5. The adhesion reinforcing unit 33 reinforces the adhesion of the adhesives in the adhesive layers 921 and 922 of the base material assembly B3. More specifically, adhesion reinforcing unit 33 includes a heating part 34, a pressure part 35, and a cooling part 36.

The heating part 34 includes a plurality of heaters 340 for heating the base material assembly B3 with radiant heat, for example. The heating part 34 heats the base material assembly B3 using each heater 340 to heat the adhesives in the adhesive layers 921 and 922. Thus, if the adhesives contain thermoplastic or thermosetting resin, heating the adhesives can reinforce the adhesion. The heating part 34 is not limited to the configuration of heating with radiant heat but it may be configured to heat the adhesives by blowing hot air on the base material assembly B3, for example. The heating part 34 may include a heating chamber in which the base material assembly B3 is to pass. Increasing a temperature inside the heating chamber allows heating of the adhesives in the base material assembly B3.

The pressure part 35 presses the base material assembly B3 from the opposite sides. The pressure part 35 is composed of two rollers between which the base material assembly B3 is caught from the opposite sides of the base material assembly B3 in the thickness direction, for example. Pressing the base material assembly B3 with the pressure part 35 removes slack or creases in the base material assembly B3.

The pressure part 35 is provided downstream from the heating part 34. This allows pressing of the second base material B2 after the second base material B2 is heated. If the adhesive surfaces of the first and second subgasket films 92a and 92b contain thermosetting or thermoplastic adhesives, pressing the second base material B2 after heating facilitates bonding between the first base material B1 and the second base material B2.

The cooling part 36 reduces the temperature of the base material assembly B3 to a predetermined intended temperature. The cooling part 36 is configured as a transport path for naturally cooling the base material assembly B3. The cooling part 36 may include a cold air supplier that blows air at a temperature lower than that of the base material assembly B3 immediately after passage through the pressure part 35 on the base material assembly B3. The cooling part 36 may include a chill roller cooled with circulation cooling water, for example, and may cool the base material assembly B3 by means of contact of the chill roller with the base material assembly B3.

If the adhesives in the adhesive layers 921 and 922 contain thermoplastic or thermosetting resin, cooling the adhesives by the cooling part 36 after heating of the adhesives by the heating part 34 can stop reaction. This achieves stable adhesions of the adhesives.

The base material assembly collection roller 5 winds the base material assembly B3 cooled by the cooling part 36 into a roll shape. In this way, the base material assembly B3 is collected. Winding the base material assembly B3 into a roll shape is not an absolute necessity. For example, the base material assembly B3 may be divided into a plurality of sheets in such a manner that each of the sheets includes one MEA 85 to collect the base material assembly B3 as a large number of sheets.

As shown in Fig. 24, the base material assembly B3 includes the subgasket added MEA 87 in which the first and second subgasket films 92a and 92b are attached to the opposite surfaces of the MEA 85. The first and second backsheets 91a and 91b are attached to the surfaces of the subgasket added MEA 87 on the opposite sides. In the base material assembly B3, the rigidity of the subgasket added MEA 87 is increased, compared to a case in the absence of the first and second backsheets 91a and 91b. This makes it possible to suppress deformation such as creases in the MEA 85 or in the first or second subgasket film 92a or 92b.

The subgasket added MEA 87 shown in Fig. 24 includes the first and second cut portions C9a and C9b. The first cut portion C9a is formed to penetrate the first subgasket film 92a along an edge of the first cover film 93a, and reaches an intermediate portion of the first backsheet 91a in the thickness direction. The second cut portion C9b is formed to penetrate the second subgasket film 92b along an edge of the second cover film 93b, and reaches an intermediate portion of the second backsheet 91b in the thickness direction.

At least one of the two bonding rollers 31, 31 may be a heating roller for heating a transported material. For example, configuring one bonding roller 31 as a heating roller allows the adhesive in the adhesive layer 922 to be heated preliminarily. A first intended temperature to be attained at the base material assembly B3 by the heating roller may be set lower than a second intended temperature to be attained at the base material assembly B3 by the heating using the heating part 34. This reduces the occurrence of rapid heating of the adhesive, and attains the second intended temperature effectively from the temperature of the adhesive by means of heating using the heating part 34. If raid heating is caused by the heating roller, the characteristics of the adhesive layers 921 and 922 are changed like in the case of rapid temperature change of an electrolyte membrane. In this case, creases may be caused in the base material assembly B3. In this regard, heating the base material assembly B3 stepwise from the first intended temperature to the second intended temperature makes it possible to reduce the occurrence of creases in the base material assembly B3.

If an ultraviolet (UV) curing adhesive is used as the adhesives in the adhesive layers 921 and 922, the adhesion reinforcing unit 33 may include a UV irradiator to emit ultraviolet light instead of the heating part 34. Irradiating the opposite surfaces of the base material assembly B3 with ultraviolet light from the UV irradiator achieves reinforcing of the adhesions of the adhesive layers 921 and 922.

As shown in Fig. 25, after the base material assembly B3 is manufactured by the present applicator, the first backsheet 91a is detached from the first subgasket film 92a at the base material assembly B3. Then, the corresponding region A91 of the first subgasket film 92a and the corresponding region A91 of the first cover film 93a as unnecessary regions are detached along the first cut portion C9a together with the first backsheet 91a. As a result, the first subgasket film 92a having a frame shape without the cut corresponding regions A91 corresponding to the first catalyst layer 83 can be left on a surface of the electrolyte membrane 82 on one side. As shown in Fig. 25, further, the second backsheet 91b is detached from the second subgasket film 92b at the base material assembly B3. Then, the corresponding region A93 of the second subgasket film 92b and the corresponding region A93 of the second cover film 93b as unnecessary regions are detached along the second cut portion C9b together with the second backsheet 91b. As a result, as shown in Fig. 25, the second subgasket film 92b having a frame shape without the cut corresponding regions A93 corresponding to the second catalyst layer 84 can be left on a surface of the electrolyte membrane 82 on the opposite side.

The adhesion reinforcing unit 33 allows the first and second subgasket films 92a and 92b to be adhesively bonded fixedly to the electrolyte membrane 82, and allows the first and second subgasket films 92a and 92b to be adhesively bonded fixedly to each other. This makes it possible to reduce the occurrence of detachment of the non-corresponding region A92 of the first subgasket film 92a from the electrolyte membrane 82 or from the non-corresponding region A94 of the second subgasket film 92b during detachment of the first backsheet 91a from the base material assembly B3 shown in Fig. 24. Likewise, this makes it possible to reduce the occurrence of detachment of the non-corresponding region A94 of the second subgasket film 92b from the electrolyte membrane 82 or from the non-corresponding region A92 of the first subgasket film 92a during detachment of the second backsheet 91b from the base material assembly B3.

The adhesion reinforcing unit 33 allows the corresponding region A91 of the first subgasket film 92a and that of the first cover film 93a to be adhesively bonded fixedly to each other, and allows the corresponding region A93 of the second subgasket film 92b and that of the second cover film 93b to be adhesively bonded fixedly to each other. This can make it unlikely that the first cover film 93a will be left unremoved on the first catalyst layer 83 during detachment of the first backsheet 91a from the base material assembly B3. Likewise, this can make it unlikely that the second cover film 93b will be left unremoved on the second catalyst layer 84 during detachment of the second backsheet 91b from the base material assembly B3.

The second catalyst layer 84 and the corresponding region A93 of the second cover film 93b may be aligned with each other by moving one of the two bonding rollers 31, 31 in the axis direction relative to the other or by changing a rotation speed. However, this causes a risk of slack or creases in either the first base material B1 or the second base material B2 at the base material assembly B3. In the gasket applicator 100, the second cut portion C9b is formed at the second subgasket base material 9b to conform to the position of the second catalyst layer 84 at the first base material B 1. This facilitates alignment between the position of the second catalyst layer 84 and the position of the corresponding region A93 of the first subgasket film 92a at the second bonding mechanism 3. As a result, during bonding of the first and second subgasket films 92a and 93b at the second bonding mechanism 3, the occurrence of a redundant portion in the longitudinal direction is reduced at each of the first and second subgasket films 92a and 92b. Thus, it becomes possible to reduce the occurrence of deformation such as creases in the subgasket added MEA 87 at the base material assembly B3.

In particular, during winding of the base material assembly B3 using the base material assembly collection roller 5, the occurrence of deformation such as creases in some part of the base material assembly B3 results in uneven thicknesses to cause a risk of deformation such as creases in the base material assembly B3 as a whole. The gasket applicator 100 reduces the occurrence of deformation such as creases to allow the base material assembly B3 to be wound and collected favorably.

Incorporating the first base material preparation unit 1 together with the second base material preparation unit 2 into the gasket applicator 100 is not an absolute necessity. Namely, the first base material B1 may be prepared in a different device, and the first base material preparation unit 1 may be transported toward the second bonding mechanism 3.

### <2. Second preferred embodiment>

A second preferred embodiment will be described. In the following description, an element having the function as a corresponding element already described will be given the same sign or a sign with an alphabet, and the detailed explanation of such an element may be omitted.

In the first preferred embodiment, the second base material B2 includes the second backsheet 91b, the second subgasket film 92b, and the second cover film 93b. However, the second backsheet 91b and the second cover film 93b are not absolute necessities in the second base material B2.

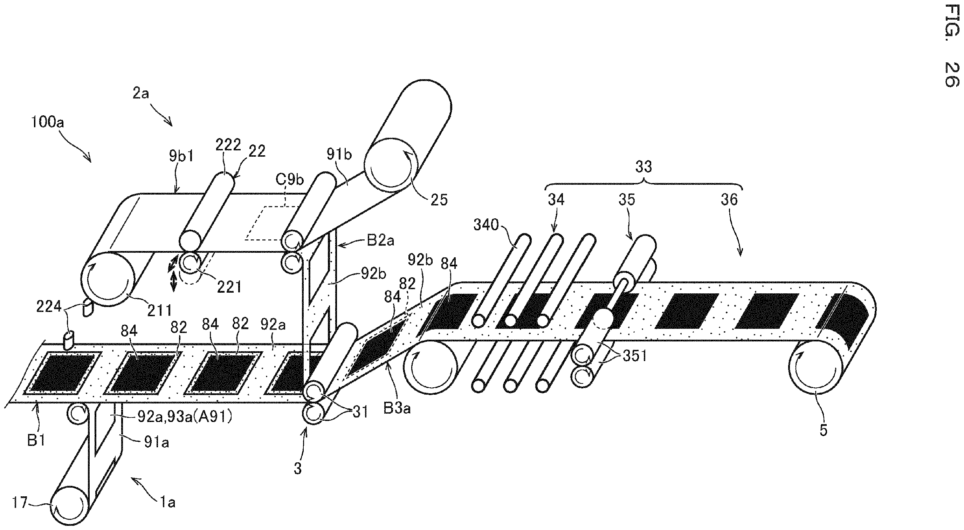

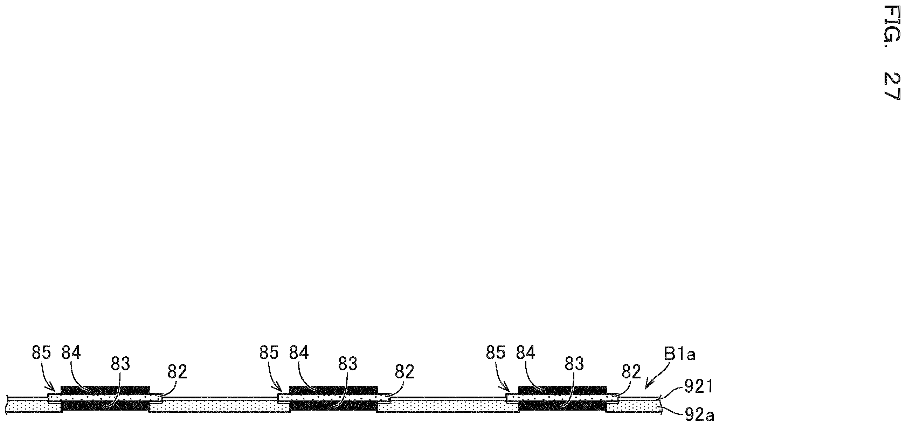

Fig. 26 is a schematic perspective view of a gasket applicator 100a according to the second preferred embodiment. Fig. 27 is a longitudinal sectional view schematically showing a first base material B1a according to the second preferred embodiment. The gasket applicator 100a includes a first base material preparation unit 1a, a second base material preparation unit 2a, and the second bonding mechanism 3. The first base material preparation unit 1a is to prepare the first base material B1a. As shown in Fig. 27, the first base material B1a includes the elongated strip-shaped first subgasket film 92a, and a plurality of the membrane electrode assemblies 85 arranged at an interval in the longitudinal direction of the first subgasket film 92a. The first base material B1a is manufactured by detaching the first backsheet 91a from the first base material B1 shown in Fig. 9, for example. The first base material preparation unit 1a includes a collection roller 17 for collecting the first backsheet 91a detached from the first base material B1.

The second base material preparation unit 2a is to manufacture a second base material B2a from the second subgasket base material 9b1 supplied from the third supply roller 211. The second subgasket base material 9b1 includes the second backsheet 91b and the second subgasket film 92b. The second base material preparation unit 2a includes the third half-cut part 22. The third half-cut part 22 forms the second cut portion C9b in the second subgasket base material 9b1 to conform to the position of the second catalyst layer 84 at the first base material B1a. The position of the second catalyst layer 84 at the first base material B1a is determined using an image obtained by the imaging part 224.

The second base material preparation unit 2a includes a backsheet collection roller 25. The backsheet collection roller 25 winds the second backsheet 91b from the second subgasket base material 9b1 provided with the second cut portion C9b and collects the wound second backsheet 91b. After the second backsheet 91b is detached from the second subgasket base material 9b1, the corresponding region A93 of the second subgasket film 92b is separated from the non-corresponding region A94. By doing so, the second base material B2a is manufactured having a single layer composed only of the non-corresponding region A94 of the elongated strip-shaped second subgasket film 92b. The second subgasket film 92b forming the second base material B2a has an opening portion corresponding to the corresponding region A93. The backsheet collection roller 25 is an example of a second removal mechanism that removes the corresponding region A93 from the elongated strip-shaped second subgasket film 92b.

The second bonding mechanism 3 is to manufacture a base material assembly B3a by bonding the first base material B1a and the second base material B2a to each other. The base material assembly B3a has the same configuration as the subgasket added MEA 87 shown in Fig. 25. In the base material assembly B3a, an edge portion of the electrolyte membrane 82 protruding into the periphery of the first catalyst layer 83 (or the second catalyst layer 84) at the MEA 85 is caught between the first and second subgasket films 92a and 92b.

The base material assembly B3a produced by the second bonding mechanism 3 is processed by the heating part 34, the pressure part 35, and the cooling part 36, and is then wound on the base material assembly collection roller 5. If the adhesives in the adhesive layers 921 and 922 contain thermoplastic or thermosetting resin, the adhesions of the adhesives can be reinforced by the heaters 340 of the heating part 34.

As shown in Fig. 26, the pressure part 35 presses the base material assembly B3a from the opposite sides using two pressure rollers 351. In the base material assembly B3a, the first catalyst layer 83 (not shown in Fig. 26) and the second catalyst layer 84 are exposed to the outside. For this reason, a body of each pressure roller 351 to abut on the base material assembly B3a is separated into two in an axis direction. Each pressure roller 351 presses the opposite side portions of the base material assembly B3a in the width direction in such a manner as not to contact the first and second catalyst layers 83 and 84, thereby facilitating bonding of the base material assembly B3a.

The pressure roller 351 may be replaced with a pressure roller configured to further press a center area of the base material assembly B3a. In this case, to reduce the occurrence of contact of the pressure roller with the first and second catalyst layers 83 and 84, an approaching/separating mechanism for moving each pressure roller closer to and farther from the base material assembly B3a may be provided.

At least one of the two bonding rollers 31 of the second bonding mechanism 3 may be a heating roller. Heating the adhesive using the heating roller achieves reinforced adhesion of the adhesive, thereby facilitating adhesive bonding between the first base material B1a and the second base material B2a.

If the adhesives in the adhesive layers 921 and 922 contain UV curing resin, a UV irradiator to irradiate the base material assembly B3a with ultraviolet light may be provided at a position between the second bonding mechanism 3 and the base material assembly collection roller 5.

Like the gasket applicator 100, the gasket applicator 100a forms the second cut portion C9b in the second subgasket base material 9b1 to conform to the position of the second catalyst layer 84 at the first base material B1a. This facilitates alignment between the position of the second catalyst layer 84 and the position of the corresponding region A93 of the second subgasket film 92b at the second bonding mechanism 3. As a result, the occurrence of deformation such as creases is reduced in the base material assembly B3a (subgasket added MEA 87).

Instead of the second base material B2a having a single layer, the second base material B2 having a plurality of layers shown in Fig. 23 may be bonded to the first base material B1a. In this case, the second base material preparation unit 2 shown in Fig. 2 may be incorporated into the gasket applicator 100a instead of the second base material preparation unit 2a.

Instead of bonding the second base material B2a to the first base material B1a, the second base material B2a may be bonded to the first base material B1. In this case, the collection roller 17 is omissible from the first base material preparation unit 1a.

While the invention has been shown and described in detail, the foregoing description is in all aspects illustrative and does not limit the invention. It is therefore understood that numerous modifications and variations not shown can be devised without departing from the scope of the invention. The components described in the foregoing preferred embodiments and in the modifications may be combined together or omitted, as appropriate, without inconsistencies.

### Reference Signs List

100, 100a Gasket applicator
1 First base material preparation unit
12 First subgasket base material transport mechanism
2 Second base material preparation unit
21 Second subgasket base material transport mechanism
22 Third half-cut part (cutting mechanism)
221 Rotary die cutter
24 Second cover film collection roller
3 Second bonding mechanism
4 Controller
410 Position determination part
5 Base material assembly collection roller
8 Electrode layer base material
82 Electrolyte membrane
83 First catalyst layer
84 Second catalyst layer
85 Membrane electrode assembly (MEA)
87 Subgasket added MEA
9a First subgasket base material
9b Second subgasket base material
91a First backsheet
91b Second backsheet
92a First subgasket film
92b Second subgasket film
93a First cover film
93b Second cover film
A91, A93 Corresponding region
A92, A94 Non-corresponding region
B1 First base material
B2 Second base material
B3 Base material assembly
C9a First cut portion
C9b Second cut portion
DR2 Width direction
DR4, DR5 Transport direction

## Claims

1. A manufacturing device for a subgasket added membrane electrode assembly (87) in which a subgasket film is applied to a membrane electrode assembly (85) including an electrolyte membrane (82), a first catalyst layer (83) located on one side of said electrolyte membrane (82), and a second catalyst layer (84) located on an opposite side of said electrolyte membrane (82), the manufacturing device comprising:
a first transport mechanism that transports a first base material (B1) including said membrane electrode assembly (85) and an elongated strip-shaped first subgasket film (92a) bonded to said membrane electrode assembly (85) on said one side;
a position determination part (410) that determines the position of said second catalyst layer (84) transported by said first transport mechanism;
a second transport mechanism that transports a subgasket base material (9b) including an elongated strip-shaped second subgasket film (92b);
a cutting mechanism (22) that forms a cut portion (C9b) for separating said second subgasket film (92b) transported by said second transport mechanism into a corresponding region (A93) of a shape corresponding to said second catalyst layer (84) and a non-corresponding region (A94) other than the corresponding region (A93) in response to the position of said second catalyst layer (84) determined by said position determination part (410); and
a bonding mechanism (3) that bonds said second subgasket film (92b) provided with said cut portion (C9b) to said first base material (B1) on said opposite side while aligning the position of said corresponding region (A93) and the position of said second catalyst layer (84) with each other.

2. The manufacturing device for the subgasket added membrane electrode assembly (87) according to claim 1, wherein
said first material (B 1) includes a first backsheet (91a) located on said one side of said first subgasket film (92a).

3. The manufacturing device for the subgasket added membrane electrode assembly (87) according to claim 1 or 2, wherein
said first base material (B1) includes a first cover film (93a) formed between said first subgasket film (92a) and said membrane electrode assembly (85) and having a shape corresponding to said first catalyst layer (83), and
said first base material (B1) includes a first cut portion (C9a) penetrating said first subgasket film (92a) along an edge of said first cover film (93a).

4. The manufacturing device for the subgasket added membrane electrode assembly (87) according to any one of claims 1 to 3, wherein
said subgasket base material (9b) further includes an elongated strip-shaped second backsheet (91b) located on one side of said second subgasket film (92b).

5. The manufacturing device for the subgasket added membrane electrode assembly (87) according to any one of claims 1 to 4, wherein
said subgasket base material (9b) further includes an elongated strip-shaped second cover film (93b) located on an opposite side of said second subgasket film (92b), and
said cutting mechanism (22) forms a second cut portion (C9b) in said subgasket base material (9b), the second cut portion (C9b) penetrating said second cover film (93b) and said second subgasket film (92b) along a shape corresponding to said second catalyst layer (84),
the manufacturing device further comprising a first removal mechanism (24) that removes said non-corresponding region (A94) of said second cover film (93b) from said subgasket base material (9b) provided with said second cut portion (C9b).

6. The manufacturing device for the subgasket added membrane electrode assembly (87) according to any one of claims 1 to 5, further comprising:
a second removal mechanism (25) that removes said corresponding region (A93) of said second subgasket film (92b).

7. The manufacturing device for the subgasket added membrane electrode assembly (87) according to any one of claims 1 to 6, wherein
said cutting mechanism (22) includes:
a cutting blade (221) for cutting said second subgasket film (92b); and
a moving mechanism (223) that moves said cutting blade (221) relative to said second subgasket film (92b) in a longitudinal direction and a width direction of said second subgasket film (92b).

8. The manufacturing device for the subgasket added membrane electrode assembly (87) according to any one of claims 1 to 7, wherein
said first base material (B1) includes a plurality of said second catalyst layers (84) arranged at an interval in a longitudinal direction of said first subgasket film (92a), and
said cutting mechanism (22) forms said second cut portion (C9b) in the second subgasket film (92b) to conform to the interval between said second catalyst layers (84).

9. A manufacturing method for a subgasket added membrane electrode assembly (87) in which a subgasket is applied to a membrane electrode assembly (85) including an electrolyte membrane (82), a first catalyst layer (83) located on one side of said electrolyte membrane (82), and a second catalyst layer (84) located on an opposite side of said electrolyte membrane (82), the manufacturing method comprising the steps of:
(a) transporting a first base material (B 1) including said membrane electrode assembly (85) and an elongated strip-shaped first subgasket film (92a) bonded to said membrane electrode assembly (85) on said one side;
(b) determining the position of said second catalyst layer (84) transported by said step (a);
(c) transporting a subgasket base material (9b) including an elongated strip-shaped second subgasket film (92b);
(d) forming a cut portion (C9b) for separating said second subgasket film (92b) transported by said step (c) into a corresponding region (A93) of a shape corresponding to said second catalyst layer (84) and a non-corresponding region (A94) in response to the position of said second catalyst layer (84) determined by said step (b); and
(e) bonding said second subgasket film (92b) provided with said cut portion (C9b) by said step (d) to said first base material (B1) on said opposite side while aligning the position of said corresponding region (A93) and the position of said second catalyst layer (84) with each other.

10. The manufacturing method for the subgasket added membrane electrode assembly (87) according to claim 9, wherein
said subgasket base material (9b) further includes an elongated strip-shaped second cover film (93b), and
said step (d) includes a step of forming a cut portion (C9b) penetrating said second cover film (93b) and said second subgasket film (92b) along a shape corresponding to said second catalyst layer (84),
the manufacturing method further comprising the step of:
(e) removing said non-corresponding region (A94) of said second cover film (93b) from said subgasket base material (9b) provided with said cut portion (C9b) by said step (d).

11. The manufacturing method for the subgasket added membrane electrode assembly (87) according to claim 9 or 10, further comprising the step of:
(f) removing said corresponding region (A93) from said second subgasket film (92b) provided with said cut portion (C9b) by said step (d).

12. The manufacturing method for the subgasket added membrane electrode assembly (87) according to any one of claims 9 to 11, wherein
said step (d) includes a step of moving a cutting blade (221) for cutting said second subgasket film (92b) relative to said second subgasket film (92b) in a longitudinal direction and a width direction of said second subgasket film (92b).

## Patentansprüche

1. Herstellungsvorrichtung für eine mit einer Unterdichtung versehene Membranelektrodenanordnung (87), bei der ein Unterdichtungsfilm auf eine Membranelektrodenanordnung (85) aufgebracht ist, die eine Elektrolytmembran (82), eine erste Katalysatorschicht (83), die auf einer Seite der Elektrolytmembran (82) angeordnet ist, und eine zweite Katalysatorschicht (84), die auf einer gegenüberliegenden Seite der Elektrolytmembran (82) angeordnet ist, enthält, wobei die Herstellungsvorrichtung umfasst:
einen ersten Transportmechanismus, der ein erstes Basismaterial (B1) transportiert, das die Membranelektrodenanordnung (85) und einen länglichen streifenförmigen ersten Unterdichtungsfilm (92a) enthält, der auf der einen Seite mit der Membranelektrodenanordnung (85) verbunden ist;
einen Positionsbestimmungsteil (410), der die Position der durch den ersten Transportmechanismus transportierten zweiten Katalysatorschicht (84) bestimmt;
einen zweiten Transportmechanismus, der ein Unterdichtungsbasismaterial (9b) transportiert, das einen länglichen streifenförmigen zweiten Unterdichtungsfilm (92b) enthält;
einen Schneidemechanismus (22), der einen Schnittabschnitt (C9b) zum Trennen des durch den zweiten Transportmechanismus transportierten zweiten Unterdichtungsfilms (92b) in einen entsprechenden Bereich (A93) mit einer Form, die der zweiten Katalysatorschicht (84) entspricht, und einen nicht entsprechenden Bereich (A94), der sich von dem entsprechenden Bereich (A93) unterscheidet, in Reaktion auf die Position der zweiten Katalysatorschicht (84), die durch das Positionsbestimmungsteil (410) bestimmt ist, bildet; und
einen Verbindungsmechanismus (3), der den zweiten Unterdichtungsfilm (92b), der mit dem Schnittabschnitt (C9b) versehen ist, mit dem ersten Basismaterial (B1) auf der gegenüberliegenden Seite verbindet, während die Position des entsprechenden Bereichs (A93) und die Position der zweiten Katalysatorschicht (84) aufeinander ausgerichtet werden.

2. Herstellungsvorrichtung für die mit einer Unterdichtung versehene Membranelektrodenanordnung (87) nach Anspruch 1, wobei
das erste Material (B1) eine erste Rückseitenfolie (91a) enthält, die auf der einen Seite des ersten Unterdichtungsfilms (92a) angeordnet ist.

3. Herstellungsvorrichtung für die mit einer Unterdichtung versehene Membranelektrodenanordnung (87) nach Anspruch 1 oder 2, wobei
das erste Basismaterial (B1) einen ersten Deckfilm (93a) enthält, der zwischen dem ersten Unterdichtungsfilm (92a) und der Membranelektrodenanordnung (85) ausgebildet ist und eine der ersten Katalysatorschicht (83) entsprechende Form aufweist, und
das erste Basismaterial (B1) einen ersten Schnittabschnitt (C9a) aufweist, der den ersten Unterdichtungsfilm (92a) entlang einer Kante des ersten Deckfilms (93a) durchdringt.

4. Herstellungsvorrichtung für die mit einer Unterdichtung versehene Membranelektrodenanordnung (87) nach einem der Ansprüche 1 bis 3, wobei
das Unterdichtungsbasismaterial (9b) ferner eine längliche streifenförmige zweite Rückseitenfolie (91b) aufweist, die auf einer Seite des zweiten Unterdichtungsfilms (92b) angeordnet ist.

5. Herstellungsvorrichtung für die mit einer Unterdichtung versehene Membranelektrodenanordnung (87) nach einem der Ansprüche 1 bis 4, wobei
das Unterdichtungsbasismaterial (9b) ferner einen länglichen streifenförmigen zweiten Deckfilm (93b) aufweist, der auf einer gegenüberliegenden Seite des zweiten Unterdichtungsfilms (92b) angeordnet ist, und
der Schneidemechanismus (22) einen zweiten Schnittabschnitt (C9b) in dem Unterdichtungsbasismaterial (9b) bildet, wobei der zweite Schnittabschnitt (C9b) den zweiten Deckfilm (93b) und den zweiten Unterdichtungsfilm (92b) entlang einer der zweiten Katalysatorschicht (84) entsprechenden Form durchdringt,
wobei die Herstellungsvorrichtung ferner einen ersten Entfernungsmechanismus (24) umfasst, der den nicht entsprechenden Bereich (A94) des zweiten Deckfilms (93b) von dem mit dem zweiten Schnittabschnitt (C9b) versehenen Unterdichtungsbasismaterial (9b) entfernt.

6. Herstellungsvorrichtung für die mit einer Unterdichtung versehene Membranelektrodenanordnung (87) nach einem der Ansprüche 1 bis 5, ferner umfassend
einen zweiten Entfernungsmechanismus (25), der den entsprechenden Bereich (A93) des zweiten Unterdichtungsfilms (92b) entfernt.

7. Herstellungsvorrichtung für die mit einer Unterdichtung versehene Membranelektrodenanordnung (87) nach einem der Ansprüche 1 bis 6, wobei
der Schneidemechanismus (22) enthält:
eine Schneidklinge (221) zum Schneiden des zweiten Unterdichtungsfilms (92b); und
einen Bewegungsmechanismus (223), der die Schneidklinge (221) relativ zu dem zweiten Unterdichtungsfilm (92b) in einer Längsrichtung und einer Breitenrichtung des zweiten Unterdichtungsfilms (92b) bewegt.

8. Vorrichtung zur Herstellung einer mit einer Unterdichtung versehenen Membranelektrodenanordnung (87) nach einem der Ansprüche 1 bis 7, wobei
das erste Basismaterial (B1) eine Vielzahl der zweiten Katalysatorschichten (84) enthält, die in einem Abstand in einer Längsrichtung des ersten Unterdichtungsfilms (92a) angeordnet sind, und
der Schneidemechanismus (22) den zweiten Schnittabschnitt (C9b) in dem zweiten Unterdichtungsfilm (92b) so ausbildet, dass er mit dem Abstand zwischen den zweiten Katalysatorschichten (84) übereinstimmt.

9. Herstellungsverfahren für eine mit einer Unterdichtung versehene Membranelektrodenanordnung (87), bei dem eine Unterdichtung auf eine Membranelektrodenanordnung (85) aufgebracht wird, die eine Elektrolytmembran (82), eine erste Katalysatorschicht (83), die sich auf einer Seite der Elektrolytmembran (82) befindet, und eine zweite Katalysatorschicht (84), die sich auf einer gegenüberliegenden Seite der Elektrolytmembran (82) befindet, umfasst, wobei das Herstellungsverfahren die folgenden Schritte umfasst:
(a) Transportieren eines ersten Basismaterials (B1), das die Membranelektrodenanordnung (85) und einen länglichen streifenförmigen ersten Unterdichtungsfilm (92a) enthält, der auf der einen Seite mit der Membranelektrodenanordnung (85) verbunden ist;
(b) Bestimmen der Position der zweiten Katalysatorschicht (84), die durch den Schritt (a) transportiert wurde;
(c) Transportieren eines Unterdichtungsbasismaterials (9b), das einen länglichen streifenförmigen zweiten Unterdichtungsfilm (92b) enthält;
(d) Ausbilden eines Schnittabschnitts (C9b) zum Trennen des zweiten Unterdichtungsfilms (92b), der durch den Schritt (c) transportiert wird, in einen entsprechenden Bereich (A93) mit einer Form, die der zweiten Katalysatorschicht (84) entspricht, und einen nicht entsprechenden Bereich (A94) in Abhängigkeit von der Position der zweiten Katalysatorschicht (84), die durch den Schritt (b) bestimmt wird; und
(e) Verbinden des zweiten Unterdichtungsfilms (92b), der mit dem Schnittabschnitt (C9b) durch den Schritt (d) versehen ist, mit dem ersten Basismaterial (B1) auf der gegenüberliegenden Seite, während die Position des entsprechenden Bereichs (A93) und die Position der zweiten Katalysatorschicht (84) aufeinander ausgerichtet werden.

10. Herstellungsverfahren für die mit einer Unterdichtung versehene Membranelektrodenanordnung (87) nach Anspruch 9, wobei
das Unterdichtungsbasismaterial (9b) ferner einen länglichen streifenförmigen zweiten Deckfilm (93b) enthält, und
der Schritt (d) einen Schritt des Ausbildens eines Schnittabschnitts (C9b) umfasst, der den zweiten Deckfilm (93b) und den zweiten Unterdichtungsfilm (92b) entlang einer Form durchdringt, die der zweiten Katalysatorschicht (84) entspricht,
wobei das Herstellungsverfahren ferner den folgenden Schritt umfasst:
(e) Entfernen des nicht entsprechenden Bereichs (A94) des zweiten Deckfilms (93b) von dem Unterdichtungsbasismaterial (9b), das mit dem Schnittabschnitt (C9b) durch den Schritt (d) versehen ist.

11. Herstellungsverfahren für die mit einer Unterdichtung versehene Membranelektrodenanordnung (87) nach Anspruch 9 oder 10, das ferner den folgenden Schritt umfasst:
(f) Entfernen des entsprechenden Bereichs (A93) von dem zweiten Unterdichtungsfilm (92b), der mit dem Schnittabschnitt (C9b) durch den Schritt (d)versehen ist.

12. Herstellungsverfahren für die mit einer Unterdichtung versehene Membranelektrodenanordnung (87) nach einem der Ansprüche 9 bis 11, wobei
der Schritt (d) einen Schritt des Bewegens einer Schneidklinge (221) zum Schneiden des zweiten Unterdichtungsfilms (92b) relativ zu dem zweiten Unterdichtungsfilm (92b) in einer Längsrichtung und einer Breitenrichtung des zweiten Unterdichtungsfilms (92b) umfasst.

## Revendications

1. Un dispositif de fabrication d'un ensemble électrode à membrane comportant un joint statique secondaire (87) dans lequel un film pour joint statique secondaire vient se fixer sur un ensemble électrode à membrane (85) comportant une membrane électrolytique (82), une première couche catalysatrice (83) implantée sur un côté de ladite membrane électrolytique (82) et une deuxième couche catalysatrice (84) implantée sur le côté opposé de ladite membrane électrolytique (82), et ce dispositif de fabrication comporte :
un premier mécanisme de transport qui achemine un premier matériau de base (B1), y compris ledit ensemble électrode à membrane (85) et un premier film pour joint statique oblong en forme de languette (92a) qui adhère audit ensemble électrode à membrane (85) sur ledit côté
un composant de détermination de position (410) qui détermine la position de ladite deuxième couche catalysatrice (84) transportée par ledit premier mécanisme de transport
un deuxième mécanisme de transport qui achemine un matériau de base pour joint statique (9b), y compris un deuxième film pour un deuxième joint statique oblong en forme de languette (92b)
un mécanisme de coupe (22) qui forme une portion de tranchage (C9b) permettant de séparer ledit deuxième film pour joint statique (92b) transporté par ledit deuxième mécanisme de transport dans une zone correspondante (A93) avec un profil qui correspond à ladite deuxième couche catalysatrice (84) et une zone qui ne correspond pas (A94) distincte de la zone correspondante (A93) en réponse à la position de ladite deuxième couche catalysatrice (84) déterminée par ledit composant de détermination de position (410) et
un mécanisme de collage (3) qui fait adhérer ledit deuxième film pour joint statique (92b) accompagné de ladite portion de tranchage (C9b) sur ledit premier matériau de base (B1) sur ledit côté opposé tout en alignant la position de ladite zone correspondante (A93) et ladite position de ladite deuxième couche catalysatrice (84) l'une contre l'autre.

2. Le dispositif de fabrication pour l'ensemble électrode à membrane comportant un joint statique supplémentaire (87) que décrit la revendication l, si ce n'est que :
ledit premier matériau (B1) comporte une première feuille de fond (9la) implantée sur un dit côté dudit premier film pour joint statique (92a).

3. Le dispositif de fabrication pour l'ensemble électrode à membrane comportant un joint statique supplémentaire (87) que décrit la revendication l ou 2, si ce n'est que :
ledit premier matériau de base (B1) comporte un premier film de recouvrement (93a) inséré entre ledit premier film pour joint statique secondaire (92a) et ledit ensemble électrode à membrane (85) et que son profil correspond à ladite première couche catalysatrice (83) et
ledit premier matériau de base (B1) comporte une première partie de tranchage (C9a) qui pénètre dans ledit premier film pour joint statique secondaire (92a) le long d'une bordure dudit premier film de recouvrement (93a).

4. Le dispositif de fabrication pour l'ensemble électrode à membrane comportant un joint statique supplémentaire (87) que décrit l'une ou l'autre des revendications l à 3, si ce n'est que :
ledit matériau de base pour joint statique secondaire (9b) comporte en outre une deuxième feuille de fond oblongue et en forme de languette (91b) implantée sur un côté dudit deuxième film statique secondaire (92b).

5. Le dispositif de fabrication pour l'ensemble électrode à membrane comportant un joint statique supplémentaire (87) que décrit l'une ou l'autre des revendications l à 4, si ce n'est que :
ledit matériau de base pour joint statique secondaire (9b) comporte en outre un deuxième film de recouvrement oblong et en forme de languette (93b) implanté sur un côté opposé dudit deuxième film statique secondaire (92b) et
ledit mécanisme de coupe (22) forme une deuxième portion de tranchage (C9b) dans ledit matériau de base pour joint statique (9b), et cette deuxième portion de tranchage (C9b) pénètre dans ledit deuxième film de recouvrement (93b) et ledit deuxième film pour joint statique (92b) le long d'un profil qui correspond à ladite deuxième couche catalysatrice (84),
ledit dispositif de fabrication comporte en outre un premier mécanisme de retrait (24) qui permet de retirer ladite zone qui ne correspond pas (A94) dudit deuxième film de recouvrement (93b) dudit matériau de base pour joint statique (9b) équipé de ladite deuxième portion de tranchage (C9b).

6. Le dispositif de fabrication pour l'ensemble électrode à membrane comportant un joint statique supplémentaire (87) que décrit l'une ou l'autre des revendications l à 5, si ce n'est qu'il comporte en outre :
un deuxième mécanisme de retrait (25) qui permet de retirer ladite zone correspondante (A93) dudit deuxième film pour joint statique (92b).

7. Le dispositif de fabrication pour l'ensemble électrode à membrane comportant un joint statique supplémentaire (87) que décrit l'une ou l'autre des revendications l à 6, si ce n'est que :
ledit mécanisme de coupe (22) se compose des éléments suivants :
une lame de tranchage (221) qui permet de couper ledit deuxième film pour joint statique (92b) et un mécanisme de déplacement (223) qui permet de déplacer ladite lame de tranchage (221) par rapport audit deuxième film pour joint statique (92b) dans un sens longitudinal et en largeur par rapport audit deuxième film pour joint statique (92b).

8. Le dispositif de fabrication pour l'ensemble électrode à membrane comportant un joint statique supplémentaire (87) que décrit l'une ou l'autre des revendications l à 7, si ce n'est que :
ledit premier matériau de base (B1) comporte une pluralité desdites deuxièmes couches catalysatrices (84) disposées à un certain intervalle dans un sens longitudinal par rapport audit premier film pour joint statique (92a) et
ledit mécanisme de coupe (22) forme ladite deuxième portion de tranchage (C9b) dans le deuxième film pour joint statique (92b) afin de se conformer à l'intervalle entre lesdites deuxièmes couches catalysatrices (84).

9. Un procédé de fabrication d'un ensemble électrode à membrane comportant un joint statique secondaire (87) dans lequel un film pour joint statique secondaire vient se fixer sur un ensemble électrode à membrane (85) comportant une membrane électrolytique (82), une première couche catalysatrice (83) implantée sur un côté de ladite membrane électrolytique (82) et une deuxième couche catalysatrice (84) implantée sur le côté opposé de ladite membrane électrolytique (82), et ce dispositif de fabrication se compose des étapes suivantes:
a) transport d'un premier matériau de base (B1), y compris ledit ensemble électrode à membrane (85) et un premier film pour joint statique oblong en forme de languette (92a) qui adhère audit ensemble électrode à membrane (85) sur ledit côté
b) détermination de la position de ladite deuxième couche catalysatrice (84) transportée par ladite étape a)
c) transport d'un matériau de base pour joint statique (9b), y compris un deuxième film pour joint statique oblong en forme de languette (92b)
d) formation d'une portion de tranchage (C9b) permettant de séparer ledit deuxième film pour joint statique (92b) transporté durant ladite première étape c) dans une région correspondante (A93) sous une forme qui correspond à ladite deuxième couche catalysatrice (84) et dans une région qui ne correspond pas (A94), en réponse à la position de ladite deuxième couche catalysatrice (84) déterminée par la dite étape b) et
e) collage dudit deuxième film pour joint statique (92b) accompagné de ladite portion de tranchage (C9b) par ladite étape d) sur ledit premier matériau de base (B1) sur ledit côté opposé tout en alignant la position de ladite zone correspondante (A93) et la position de ladite deuxième couche catalysatrice (84) l'une contre l'autre.

10. Le procédé de fabrication de l'ensemble électrode à membrane comportant un joint statique supplémentaire (87) que décrit la revendication 9, si ce n'est que :
ledit matériau de base pour joint statique (9b) comporte, en outre, un deuxième film de recouvrement oblong en forme de languette (93b) et
ladite étape d) contient une étape de formation d'une portion de tranchage (C9b) qui pénètre dans ledit deuxième film de recouvrement (93b) et ledit deuxième film pour joint statique (92b) le long d'un profil qui correspond à ladite deuxième couche catalysatrice (84),
ce procédé de fabrication comporte, en outre, l'étape suivante :
e) retrait de ladite région qui ne correspond pas (A94) dudit deuxième film de recouvrement (93b) pour l'écarter dudit matériau de base pour joint statique (9b) qui est équipé de ladite portion de tranchage (C9b) par ladite étape d).

11. Le procédé de fabrication de l'ensemble électrode à membrane comportant un joint statique supplémentaire (87) que décrit la revendication 9 ou 10, si ce n'est qu'il comporte, en outre, l'étape suivante :
f) retrait de ladite région qui ne correspond pas (A93) pour l'écarter dudit deuxième film pour joint statique (92b) qui est équipé de ladite portion de tranchage (C9b) par ladite étape d).

12. Le procédé de fabrication pour l'ensemble électrode à membrane comportant un joint statique supplémentaire (87) que décrit l'une ou l'autre des revendications 9 à 11, si ce n'est que :
ladite étape d) comporte une étape de déplacement d'une lame de tranchage (221) qui permet de découper ledit deuxième film pour joint statique (92b) par rapport audit deuxième film pour joint statique (92b) dans un sens longitudinal et en largeur par rapport au deuxième film pour joint statique (92b).
